# EUROPÄISCHE PATENTSCHRIFT

(11) **EP 3 921 484 B1**
(45) Veröffentlichungstag und Bekanntmachung des Hinweises auf die Patenterteilung: **19.07.2023**
(21) Anmeldenummer: 20702979.4
(22) Anmeldetag: 27.01.2020
(51) Int. Cl.: B29D 24/00, B32B 3/06, B32B 3/30, B32B 5/18, B32B 27/08, F24S 20/64, E04C 2/32, E04C 2/296, F24D 3/12, F24S 20/66, F28F 3/04, B29D 99/00, B32B 3/28, B32B 7/05, B32B 7/12, B32B 27/06, B32B 37/00, B32B 37/18

(54) **KERNELEMENT FÜR SANDWICHELEMENTE, VERWENDUNGEN EINES SOLCHEN KERNELEMENTS UND VERFAHREN ZUM HERSTELLEN EINES SOLCHEN KERNELEMENTS**
CORE ELEMENT FOR SANDWICH ELEMENTS, USE OF SUCH A CORE ELEMENT, AND METHOD FOR PRODUCING SUCH A CORE ELEMENT
ÉLÉMENT ÂME POUR ÉLÉMENTS SANDWICH, UTILISATION D'UN TEL ÉLÉMENT ÂME ET PROCÉDÉ DE FABRICATION D'UN TEL ÉLÉMENT ÂME

(30) Priorität: 06.02.2019 DE 102019201527
(43) Veröffentlichungstag der Anmeldung: 15.12.2021
(73) Patentinhaber: Bieler, Marion, 48465 Ohne (DE)
(72) Erfinder: Bieler, Thomas, 48465 Ohne (DE)
(74) Vertreter: Schatz, Markus Franz-Josef
(86) Internationale Anmeldenummer: PCT/EP2020/051951
(87) Internationale Veröffentlichungsnummer: WO 2020/160953

(56) Entgegenhaltungen:
- KR-B1- 100 734 182

## Beschreibung

Die Erfindung betrifft ein Kernelement für sogenannte Sandwich(bau)elemente. Sandwichelemente sind an sich bekannt. Diese entstehend nach der sogenannten Sandwichbauweise. Dabei wird auf einen zumindest mäßig schubsteifen Kern beidseitig als außenliegende Deckschicht jeweils eine dehnsteife Decklage aufgebracht.

Bei bekannten Sandwichelementen besteht der Kern aus Vollmaterial (Polyethylen, Balsaholz), Schaumstoff (Hartschaum, Metallschaum), Dämmmaterial (Hartschaum, Mineralwolle) oder ist in Form eines Wabengitters (Papier, Pappe, Metall, Kunststoff) ausgeführt. Der Kern überträgt auftretende Schubkräfte und stützt die Deckschichten. Als Deckschichten werden regelmäßig Blech, Kunststoff, (Sperr-)Holz oder Faserverbundwerkstoffe benutzt.

Eine Aufgabe der Erfindung besteht darin, ein weiteres Kernelement für Sandwichelemente anzugeben.

Diese Aufgabe wird erfindungsgemäß mittels eines Kernelements mit den Merkmalen des Anspruchs 1 gelöst. Das Kernelement kommt als Kernelement für Sandwichelemente und Sandwichbauelemente in Betracht, ist jedoch auch einzeln verwendbar. Der zentrale Aspekt der hier vorgeschlagenen Neuerung ist ein im Folgenden als Halbkugelplatte bezeichnetes Bauelement. Das Kernelement umfasst zumindest zwei Halbkugelplatten, also zum Beispiel genau zwei Halbkugelplatten oder drei, vier oder mehr Halbkugelplatten. Jede Halbkugelplatte ist eine Platte, in welche uniforme Erhebungen eingeformt sind. Die Außenoberflächen der Erhebungen sind - zumindest abschnittsweise - halbkugelförmig, kugelsegmentförmig oder kugelschichtförmig. Abgesehen von randseitigen Erhebungen sind die Erhebungen von ebenen Abschnitten der Halbkugelplatte umgeben. Jede Halbkugelplatte weist eine Vielzahl von Erhebungen auf. Diese Erhebungen haben allesamt dieselbe Form (uniforme Erhebungen). Dies schließt nicht aus, dass eine Halbkugelplatte zusätzlich zu den uniformen Erhebungen noch weitere Erhebungen aufweist, zum Beispiel zwischen den uniformen Erhebungen oder zwischen einzelnen uniformen Erhebungen. Nur bei einer besonderen, optionalen Ausführungsform haben alle Erhebungen einer Halbkugelplatte dieselbe Form.

Im Interesse einer besseren Lesbarkeit der weiteren Beschreibung wird die Geometrie der Außenoberfläche der Erhebungen einer Halbkugelplatte - auch und gerade in Anlehnung an den ebenfalls nicht einschränkend auszulegenden Begriff "Halbkugelplatte" - als Halbkugel oder halbkugelförmig bezeichnet.

In der hier vorgelegten Beschreibung geht die Reichweite des Begriffs "Halbkugel" oder abgeleiteter Begriffe aber über die Reichweite nach der geometrischen Definition (Schnitt einer Vollkugel mit einer Schnittebene, welche den Kugelmittelpunkt umfasst) hinaus. Der Begriff "Halbkugel" umfasst in der hier vorgelegten Beschreibung eine echte Halbkugel, ein Kugelsegment und eine Kugelschicht. Eine Halbkugel und ein Kugelsegment weisen eine punktförmige höchste Stelle (Scheitelpunkt) auf. Eine Kugelschicht hat anstelle eines Scheitelpunkts eine flächige höchste Stelle (Scheitelfläche).

Ein Kugelsegment ist bekanntlich ein Abschnitt einer Vollkugel, welcher aufgrund eines Schnitts der Vollkugel mit genau einer (grundsätzlich beliebigen) Schnittebene resultiert. Eine Halbkugel ist bekanntlich eine Sonderform eines Kugelsegments. Eine Kugelschicht ist bekanntlich ein Abschnitt einer Vollkugel, welcher aufgrund eines Schnitts der Vollkugel mit genau zwei parallelen und ansonsten grundsätzlich beliebigen Schnittebenen resultiert. Für die hier vorgeschlagene Neuerung ist ein Kugelsegment bevorzugt aber in grundsätzlich optionaler Art ein Kugelsegment, bei dem die Schnittebene und der obere Scheitelpunkt des Kugelkörpers auf derselben Seite des Mittelpunkts der Vollkugel liegen (Halbkugelsegment). Für die hier vorgeschlagene Neuerung ist eine Kugelschicht bevorzugt aber in grundsätzlich optionaler Art eine Kugelschicht, bei der die beiden parallelen Schnittebenen auf derselben Seite des Mittelpunkts der Vollkugel liegen (Halbkugelschicht).

Es ist noch darauf hinzuweisen, dass der Begriff "Halbkugel" - in der oben definierten Reichweite - nicht notwendig einen Vollkörper bezeichnet, denn die Spezifikation bezieht sich auf die Außenoberfläche der Erhebungen. Als Außenoberfläche wird dabei die flächenmäßig größte Oberfläche angesehen; die Außenoberfläche einer Erhebung ist diejenige Oberfläche, die zumindest abschnittsweise konvex ist. Die Erhebungen sind bevorzugt hohl und eine Geometrie solcher Erhebungen müsste demnach korrekterweise als Halbkugelschale bezeichnet werden, wobei der Begriff Halbkugelschale entsprechend der obigen Erläuterungen die Begriffe Halbkugelschale, Kugelsegmentschale und Kugelschichtschale umfasst.

Die Besonderheit und damit einer der wesentlichen Vorteile der hier vorgeschlagenen Neuerung, also des hier vorgeschlagenen Kernelements, besteht in einer besonders hohen Druckstabilität. Diese hohe Druckstabilität ergibt sich aufgrund der Form der Erhebungen.

Dabei kommt es nicht oder zumindest nicht wesentlich darauf an, ob die Erhebungen in ihren Außenoberflächen die Form einer echten Halbkugel, die Form eines Kugelsegments, eines Halbkugelsegments, einer Kugelschicht oder einer Halbkugelschicht haben. Deshalb wurde die oben erläuterte Definition des Begriffs "Halbkugel" eingeführt, der entsprechend auch für abgeleitete Ausdrücke wie halbkugelförmig und dergleichen gilt. Bei jeder Erwähnung einer Halbkugel oder einer Halbkugelform sind entsprechend auch die anderen Formen (Kugelsegment, Halbkugelsegment, Kugelschicht, Halbkugelschicht) stets mitzulesen und diese Formen sind als mögliche Formen der Erhebungen einer Halbkugelplatte Bestandteil der gegenständlichen Erfindung.

Des Weiteren kommt es für die Druckstabilität nicht oder zumindest nicht wesentlich darauf an, ob eine halbkugelförmige Erhebung (in der oben definierten Reichweite) in ihrer Basis und/oder im Bereich einer eventuellen Scheitelfläche echt kreisförmig oder ggf. elliptisch ist, denn eine Ellipse ist bekanntlich ein Kreis, der in einer Koordinatenrichtung gestaucht oder gedehnt ist. Bei der oben definierten Reichweite des Begriffs "Halbkugel" sind entsprechend auch die Geometrien mitzulesen, die sich auf Basis eines Ellipsoids ergeben: Halbellipsoid, Ellipsoidsegment, Halbellipsoidsegment, Ellipsoidschicht, Halbellipsoidschicht. Auch diese Formen sind als mögliche Formen der Erhebungen einer Halbkugelplatte Bestandteil der gegenständlichen Erfindung. Dies resultiert auch aus dem Umstand, dass eine exakte Halbkugel fertigungstechnisch durchaus nicht unproblematisch ist und auch nach Fertigung einer Halbkugelplatte mittels einer Form mit exakt halbkugeligen Formelementen zum Beispiel aufgrund von verstärkter Schwindung in einer Raumrichtung und/oder Streckung und/oder Stauchung, zum Beispiel beim Transport während der Fertigung, eine Verzerrung ursprünglich halbkugeliger Erhebungen resultieren kann.

Alle genannten Geometrien (Halbkugel, Kugelsegment, Halbkugelsegment, Kugelschicht, Halbkugelschicht, Halbellipsoid, Ellipsoidsegment, Halbellipsoidsegment, Ellipsoidschicht, Halbellipsoidschicht) umfassen einen Bereich in Form einer Ellipsoidschicht, ggf. in einer Sonderform als Kugelschicht oder als Halbkugelschicht. Folglich umfasst bei der hier vorgeschlagenen Neuerung jede Erhebung einer Halbkugelplatte zumindest einen Bereich in Form einer Ellipsoidschicht; mit anderen Worten weist jede Erhebung zumindest abschnittsweise die Form einer Ellipsoidschicht auf. Eine allgemeinere Definition der in den gegenwärtigen Ansprüchen als "halbkugelförmig, kugelsegmentförmig oder kugelschichtförmig" definierten Erhebungen lautet damit, dass die Erhebungen zumindest einen Bereich in Form einer Ellipsoidschicht umfassen.

Für die Ausführung des Kernelements kommt es schließlich auch nicht oder zumindest nicht wesentlich darauf an, ob eine halbkugelförmige Erhebung (in der oben definierten Reichweite) als Basis zum Beispiel einen ringförmigen Abschnitt aufweist. Daher ist bei der Definition der Halbkugelplatte darauf abgestellt, dass die Außenoberflächen der Erhebungen zumindest abschnittsweise halbkugelförmig, kugelsegmentförmig oder kugelschichtförmig sind. Im Falle einer zum Beispiel ringförmigen Basis umfasst die Erhebung einen vom ebenen Abschnitt der Platte ausgehenden ringförmigen Abschnitt, an welchen die halbkugelförmige Erhebung (in der oben definierten Reichweite) anschließt. Andere Geometrien einer Basis (zwischen Platte und Erhebung) kommen genauso in Betracht, zum Beispiel eine polygonale Basis.

Zum Erhalt eines Kernelements sind zwei oder jeweils zwei Halbkugelplatten mit solchen Erhebungen einander mit ihren Erhebungen zugewandt. Bei genau zwei oder jeweils zwei zu einem Kernelement kombinierten Halbkugelplatten liegen die Erhebungen einer Halbkugelplatte mit ihren freien Oberseiten an einem ebenen Abschnitt der anderen Halbkugelplatte, also zwischen den Erhebungen der anderen Halbkugelplatte an. Dies gilt für die andere Halbkugelplatte entsprechend. Mit den an der jeweils anderen Halbkugelplatte anliegenden Oberseiten der Erhebungen ergibt sich eine Vielzahl von punkt- oder kreisförmigen Kontaktstellen zwischen den Halbkugelplatten. Diese Kontaktstellen leiten auf die Oberfläche einer Halbkugelplatte einwirkende Kräfte in die jeweils anschließende halbkugelförmige Erhebung und im Weiteren in die ebene Fläche der anderen Halbkugelplatte. Dadurch ergibt sich die hohe Druckstabilität des hier vorgeschlagenen Kernelements.

Bevorzugt, aber grundsätzlich optional sind die Erhebungen auf der Gesamtfläche der Halbkugelplatte voneinander regelmäßig beabstandet und damit auf der Gesamtfläche der Halbkugelplatte matrixartig angeordnet. Das aufgrund der matrixartigen Anordnung resultierende Raster wird als Erhebungsraster bezeichnet. Bevorzugt, aber grundsätzlich optional sind die beiden oder jeweils zwei Halbkugelplatten zumindest in Bezug auf das Erhebungsraster gleich.

Bei einer geeigneten, lösbaren oder nicht lösbaren Verbindung zumindest zweier Halbkugelplatten miteinander, nämlich einer Verbindung der freien Oberseiten (Scheitelpunkte oder Scheitelflächen) der Erhebungen mit dem ebenen Abschnitt, an dem sie jeweils anliegen, ergibt sich auch die grundsätzlich von bekannten Sandwichelementen bekannte hohe Tragfähigkeit und Steifigkeit. Die ebenen Abschnitte der Halbkugelplatten wirken dann wie die bei bisherigen Sandwichelementen erforderlichen Deckschichten.

Einer der wesentlichen Vorteile der hier vorgeschlagenen Neuerung, also des hier vorgeschlagenen Kernelements, besteht neben der bereits erwähnten und vor allem aufgrund der halbkugelförmigen Erhebungen resultierenden besonders hohen Druckstabilität darin, dass das Kernelement vergleichsweise einfach hergestellt werden kann. Jede der zumindest zwei von dem Kernelement umfassten Halbkugelplatten kann zum Beispiel mittels Pressverfahren, durch Tiefziehen oder dergleichen hergestellt werden. Nach dem Herstellen zumindest zweier Halbkugelplatten, gegebenenfalls auch nacheinander auf derselben Maschine, können die beiden Halbkugelplatten in der oben beschriebenen Art und Weise miteinander kombiniert werden und bereits damit ist das Kernelement hergestellt. Zusätzliche Deckschichten, wie sie bei bisherigen Sandwichelementen notwendig sind, sind nicht erforderlich, gleichwohl aber optional möglich.

Ein weiterer entscheidender Vorteil der hier vorgeschlagenen Neuerung besteht darin, dass die Kernelemente nicht auf eine ebene Form beschränkt sind und Biegungen aufweisen können. Ein möglicher Biegeradius ist dabei im Wesentlichen nur durch den Abstand der Erhebungen voneinander, insbesondere das Erhebungsraster, in Richtung der beabsichtigten Biegung beschränkt. Während bei einem ebenen Kernelement die Erhebungen einer Halbkugelplatte üblicherweise mittig zwischen benachbarten Erhebungen der jeweils anderen Halbkugelplatte zu liegen kommen, ergibt sich bei einer Biegung eine aus der mittigen Position verschobene Position.

Ein weiterer Vorteil der hier vorgeschlagenen Neuerung besteht darin, dass ein einzelnes Kernelement, also eine Kombination von zumindest zwei Halbkugelplatten, insgesamt verformbar ist, zum Beispiel durch Erwärmung und/oder Tiefziehen. Dabei resultierende Verformungen bilden sich auch als Streckungen oder Stauchungen der Erhebungen und/oder der ebenen Abschnitte zwischen den Erhebungen ab. Die oben erwähnte besondere Drucksteifigkeit und Stabilität des Kernelements reduziert sich dadurch - wenn überhaupt - nur marginal. Mittels solcher Verformungen lassen sich noch komplexere Geometrien schaffen, als dies durch Biegungen entlang jeweils einer Raumachse möglich wäre. Mittels solcher Verformungen lassen sich zum Beispiel Kernelemente schaffen, die unmittelbar oder ggf. nach einer Beschichtung oder einer Anbringung zumindest einer Deckschicht oder dergleichen, als Karosserieteile von Fahrzeugen, Teile einer Innenverkleidung von Fahrzeugen und dergleichen verwendbar sind.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Kernelements oder eines Verfahrens zum Herstellen eines solchen Kernelements nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier angegebene Kernelement auch entsprechend der abhängigen Verfahrensansprüche weitergebildet sein kann, etwa indem das Kernelement aufgrund eines Verfahrensschritts resultierende Merkmale aufweist und umgekehrt, also etwa indem das Verfahren zum Herstellen eines Kernelements durch Verfahrensschritte fortgebildet ist, die zum Erhalt eine gegenständlichen Merkmals des Kernelements bestimmt und geeignet sind.

Bei einer Ausführungsform des Kernelements sind zwei Halbkugelplatten oder jeweils zwei Halbkugelplatten miteinander verbunden, indem die Erhebungen im Bereich ihrer Scheitelpunkte oder Scheitelflächen mit dem ebenen Abschnitt der anderen oder einer anderen Halbkugelplatte, an dem sie anliegen, verbunden sind. Ein solches Verbinden zweier oder jeweils zweier Halbkugelplatten ist produktionstechnisch einfach realisierbar und sorgt für eine mechanisch ausreichend feste und dauerhaft belastbare Verbindung. Das Verbinden kann in Form eines Verklebens, Verschweißens, Verschmelzens und so weiter erfolgen. Das Verbinden durch Verkleben kann optional unmittelbar an das Herstellen der Halbkugelplatten anschließen, etwa indem zwei Halbkugelplatten mit einander zugewandten Erhebungen aus einem sogenannten Kalander, einem Walzenstuhl oder dergleichen auslaufen, die Erhebungen im Bereich ihrer Scheitelpunkte oder Scheitelflächen mit einem Klebstoff versehen werden und die beiden Halbkugelplatten sodann durch ein weiteres Pressverfahren (Durchlaufpresse, Doppelbandpresse) laufen, welche die beiden Halbkugelplatten miteinander in Verbindung bringt und die Scheitelpunkte oder Scheitelflächen der Erhebungen jeder Halbkugelplatte mit dem dort applizierten Klebstoff in Kontakt mit dem ebenen Abschnitt der jeweils anderen Halbkugelplatte bringt und beide aufeinander presst.

Bei einer besonderen, vorteilhaften Ausführungsform des Kernelements tragen die jeweils in einem gleichen Erhebungsraster angeordneten Erhebungen im Bereich ihrer Scheitelpunkte oder Scheitelflächen radial nach außen weisende Noppen und jede Halbkugelplatte weist im Bereich ihrer ebenen Abschnitte und im Erhebungsraster zur Aufnahme jeweils einer Noppe Öffnungen auf. Bei zwei oder jeweils zwei miteinander kombinierten Halbkugelplatten greifen die Noppen einer Halbkugelplatte formschlüssig in die Öffnungen der jeweils anderen Halbkugelplatte ein. Der Vorteil dieser Ausführungsform besteht vor allem darin, dass mit dem Eingriff der Noppen in die Öffnungen zumindest eine anfängliche Justierung der Halbkugelplatten relativ zueinander gewährleistet ist und bei einer formschlüssigen Aufnahme der Noppen in den Öffnungen regelmäßig auch schon eine durchaus belastbare Kombination zweier Halbkugelplatten gegeben ist. Auch ein Kernelement mit solchen Halbkugelplatten lässt sich in der oben beschriebenen Art und Weise herstellen. Auch dann laufen zum Beispiel zwei Halbkugelplatten mit einander zugewandten Erhebungen aus einer in der Fachterminologie als Kalander bezeichneten Maschine oder dergleichen aus und werden sodann mittels einer weiteren Presse, welche die beiden Halbkugelplatten miteinander in Verbindung bringt und einen Eintritt der Noppen in die Öffnungen bewirkt, miteinander kombiniert. Vor dem Kombinieren der beiden Halbkugelplatten mittels der weiteren Presse können die Scheitelpunkte oder Scheitelflächen der Erhebungen und/oder die Noppen mit einem Klebstoff versehen werden. Auch dies kann nahtlos in den Herstellungsprozess integriert werden. Zusätzlich oder alternativ zu einem Verkleben können Halbkugelplatten auch durch Verschweißen oder Verschmelzen der Noppen in den Öffnungen miteinander verbunden werden.

Die von den Öffnungen aufgenommenen Noppen gewährleisten aufgrund der einstückigen Verbindung mit den daran anschließenden halbkugelförmigen Erhebungen eine besondere hohe Tragfähigkeit und Steifigkeit des Kernelements, denn durch die von den Öffnungen aufgenommenen Noppen können diese und die daran anschließenden Erhebungen relativ zur Ebene mit den Öffnungen nicht verschoben werden. Dies ist ein erheblicher Vorteil im Vergleich zu einer zum Beispiel durch Verkleben bewirkten Kombination zweier Halbkugelplatten, denn bei einem Klebstoff ist unter Umständen im Rahmen der Elastizität des Klebstoffs eine solche Verschiebung noch möglich, wodurch eine Durchbiegung möglich wird.

Bei einer nochmals weiteren vorteilhaften Ausführungsform des Kernelements sind die beiden Halbkugelplatten des Kernelements oder mindestens zwei Halbkugelplatten des Kernelements an zwei Randseiten, insbesondere an zwei gegenüberliegenden Randseiten, miteinander verbunden und die beiden an zwei Randseiten miteinander verbundenen Halbkugelplatten sind von einer der verbleibenden Randseiten zu der anderen verbleibenden Randseite für ein flüssiges oder gasförmiges Medium durchströmbar. Dies macht das Kernelement für Anwendungsfälle wie Heizen, Kühlen und Energiegewinnung (Sonnenkollektor) verwendbar. Unabhängig davon kann ein solches Kernelement auch als Segment in einem Leitungssystem (Wasserversorgung, Lüftung und dergleichen) fungieren und ersetzt dabei ganz oder zumindest abschnittsweise herkömmliche Rohre, insbesondere Wasserrohre, Kanäle, insbesondere Lüftungskanäle, oder dergleichen. Alternativ oder zusätzlich nimmt ein solches Kernelement Stromleitungen, Signalleitungen, Kommunikationsleitungen oder dergleichen auf oder umfasst randseitig kontaktierbare Abschnitte solcher Leitungen.

Zusätzlich oder alternativ zu einer Ausführungsform mit zumindest zwei oder jeweils zwei randseitig miteinander verbundenen Halbkugelplatten nimmt bei einer besonderen Ausführungsform des Kernelements das Kernelement zwischen den beiden Halbkugelplatten oder zwischen zumindest zwei Halbkugelplatten Leitungen auf, welche in einer Raumrichtung von den ebenen Abschnitten der Halbkugelplatten und in einer dazu senkrechten Raumrichtung von den Erhebungen der Halbkugelplatten eingeschlossen sind. Solche Leitungen können zum Beispiel Leitungen für ein flüssiges oder gasförmiges Medium sein. Auch in einer solchen Konfiguration ist das Kernelement für Anwendungsfälle wie Heizen, Kühlen und Energiegewinnung (Sonnenkollektor) verwendbar. Ebenso kommt auch ein solches Kernelement - wie oben beschrieben - (zusätzlich oder alternativ) als Segment in einem Leitungssystem (Wasserversorgung, Lüftung und dergleichen) in Betracht. Auch bei einem solchen Kernelement ist zusätzlich oder alternativ eine Aufnahme von Stromleitungen, Signalleitungen, Kommunikationsleitungen oder dergleichen oder eine Ausführung mit randseitig kontaktierbaren Abschnitten solcher Leitungen vorgesehen.

Bei einer Kombination der beiden durchströmbaren Ausführungsformen des Kernelements (auf zwei Seiten randseitig geschlossen; Leitungen im Innern des Kernelements) kommt eine solche Ausführungsform des Kernelements zum Beispiel auch als Wärmetauscher in Betracht. Dann findet bei Verwendung eines solchen Kernelements zwischen den Oberflächen der Leitungen im Innern des Kernelements und dem in der Umgebung der Leitungen und ebenfalls im Innern des Kernelements strömenden Medium in grundsätzlich an sich bekannter Art und Weise eine Wärmeübertragung statt. Ein solches Kernelement kann je nach Anwendungssituation zum Heizen oder zum Kühlen verwendet werden.

Die Erfindung ist damit auch eine Verwendung eines Kernelements wie hier und im Folgenden beschrieben als Sonnenkollektor, also als Flächenheizung oder Flächenkühlung oder als Wärmetauscher.

Bei einer weiteren vorteilhaften Ausführungsform des Kernelements ist ein freier Raum zwischen zwei einander zugewandten Halbkugelplatten sowie zwischen den davon umfassten Erhebungen mit einem Dämmmaterial, zum Beispiel PUR-Schaum oder dergleichen, ausgefüllt. Ein solches Material in dem von den beiden einander zugewandten Halbkugelplatten eingeschlossenen Hohlraum erhöht nochmals die Druckfestigkeit des Kernelements. Zusätzlich führt das Dämmmaterial zu einer hervorragenden thermischen und/oder akustischen Isolation zwischen Bereichen auf unterschiedlichen Seiten des Kernelements, zum Beispiel zwischen zwei durch das Kernelement oder mehrere gleichartige Kernelemente abgeteilte Räume, wenn das Kernelement oder die Kernelemente als Innenwand fungiert bzw. fungieren, oder zwischen einem Innenraum und der Umgebung, wenn das Kernelement oder mehrere gleichartige Kernelemente als Außenwand fungieren.

Die mit der Anmeldung eingereichten Patentansprüche sind Formulierungsvorschläge ohne Präjudiz für die Erzielung weitergehenden Patentschutzes. Da speziell die Merkmale der abhängigen Ansprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der jeweils in Bezug genommenen Ansprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Allerdings sind bei gleichen Gegenständen nicht alle Gegenstände einzeln bezeichnet.

Das oder jedes Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1: eine Platte, in welche zwischen ebenen Abschnitten halbkugelförmige Erhebungen eingeformt sind (Halbkugelplatte) in zwei isometrischen Ansichten,
- Fig. 2: ein aus zwei Halbkugelplatten gebildetes Kernelement, insbesondere für Sandwichelemente, in einer isometrischen Ansicht,
- Fig. 3: das Kernelement aus Fig. 2 in weiteren Ansichten,
- Fig. 4: das Kernelement aus Fig. 2 mit einer Deckschicht,
- Fig. 5: das Kernelement aus Fig. 2 mit beidseitig jeweils einer Deckschicht und in verschiedenen Ansichten,
- Fig. 6: eine spezielle Ausführungsform eines Kernelements mit Noppen auf einem Scheitelpunkt der Erhebungen,
- Fig. 7: das Kernelement aus Fig. 6 mit beidseitig jeweils einer Deckschicht und in verschiedenen Ansichten,
- Fig. 8: verschiedene Anordnungen von Erhebungen auf der Gesamtfläche jeweils einer Halbkugelplatte,
- Fig. 9: ein mehrschichtiges Kernelement, wobei jede Schicht einem Kernelement gemäß Fig. 3 oder Fig. 6 entspricht,
- Fig. 10: eine weitere Ausführungsform eines mehrschichtigen Kernelements,
- Fig. 11: ein Kernelement mit zwischen zwei Halbkugelplatten eingeschlossenen Leitungen,
- Fig. 12: ein von einem Medium durchströmtes oder mit einem Dämmmaterial ausgefülltes Kernelement,
- Fig. 13: bis
- Fig. 16: Varianten der Erhebungen,
- Fig. 17: und
- Fig. 18: Varianten der Anordnung der Erhebungen und
- Fig. 19: gefüllte Erhebungen.

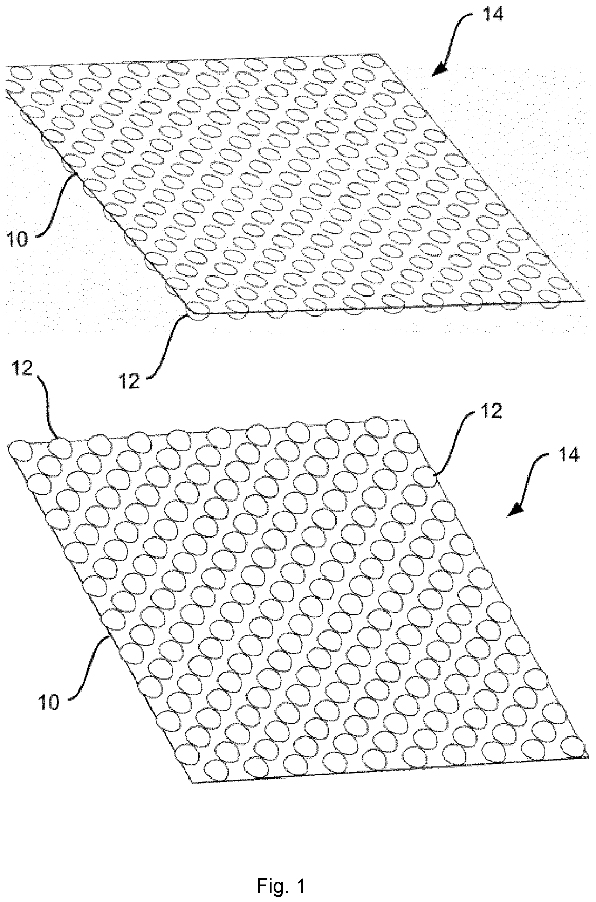

Figur 1 zeigt zwei Platten 10 mit einer Vielzahl von beim dargestellten Ausführungsbeispiel halbkugelförmigen Erhebungen 12. Abgesehen von randseitigen Erhebungen 12 sind die Erhebungen 12 allseitig von ebenen Abschnitten der jeweiligen Platte 10 umgeben.

Bezüglich der Geometrie der Erhebungen 12 wird auf die Erläuterungen und Definitionen im allgemeinen Beschreibungsteil verwiesen. Eine Bezeichnung der Erhebungen 12 als halbkugelförmig bedeutet ausdrücklich keine Beschränkung auf die geometrische Form einer Halbkugel. Vielmehr ist eine Halbkugelform nur eine von vielen Möglichkeiten. Weitere mögliche Geometrien sind insbesondere eine kugelsegmentförmige Geometrie, eine halbkugelsegmentförmige Geometrie, eine kugelschichtförmige Geometrie, eine halbkugelschichtförmige Geometrie sowie solche Geometrien auf Basis eines Ellipsoids anstelle einer Kugel. Ohne Bezug auf solche Geometrien kann eine jede Erhebung 12 auch dadurch definiert werden, dass sie eine elliptische, insbesondere kreisförmige Basis, eine zumindest abschnittsweise konvexe Außenoberfläche sowie einen oberen Scheitelpunkt oder anstelle eines Scheitelpunkts eine elliptisch, insbesondere kreisförmig berandete Scheitelfläche aufweist.

Für die weitere Beschreibung gilt, dass bei jeder Erwähnung einer Erhebung 12 die oben erwähnten Geometrien und/oder die einen Bezug auf solche Geometrien vermeidende obige Definition stets mitzulesen sind.

Die Erhebungen 12 werden zum Beispiel durch Tiefziehen in eine ursprünglich ebene Platte 10 eingeformt. Alternativ kann die Platte 10 auch in einem Fertigungsprozess, insbesondere entlang einer Fertigungslinie, mit allen Erhebungen 12 gebildet werden.

Die Platte 10 zusammen mit den davon einstückig umfassten Erhebungen 12 (nur einzelne in der Darstellung bezeichnet) wird im Folgenden als Halbkugelplatte 14 bezeichnet. Auch dabei ist stets mitzulesen, dass die Geometrie der Erhebungen 12 eines als Halbkugelplatte 14 bezeichneten Bauteils ausdrücklich nicht auf eine exakte Halbkugelform beschränkt ist. Unabhängig davon, welche exakte Geometrie die jeweiligen Erhebungen 12 aufweisen, gilt stets, dass die Erhebungen 12 eines als Halbkugelplatte 14 bezeichneten Bauteils dieselbe Höhe und dieselbe Form oder zumindest im Rahmen üblicher Fertigungstoleranzen dieselbe Höhe und dieselbe Form haben; jede Halbkugelplatte 14 weist uniforme Erhebungen 12 auf.

Für die in Figur 1 und in den folgenden Figuren gezeigten Halbkugelplatten 14 gilt, dass stets Halbkugelplatten 14 mit den bei der hier vorgeschlagenen Neuerung im Vordergrund stehenden Erhebungen 12 gezeigt sind, wobei die Halbkugelplatten 14 nur solche Erhebungen 12 aufweisen. Bei solchen Halbkugelplatten 14 sind alle Erhebungen 12 gleich, nämlich zumindest im Rahmen üblicher Fertigungstoleranzen gleich. Die Darstellung von Ausführungsformen mit Halbkugelplatten 14 mit gleichen Erhebungen 12 schließt nicht aus, dass Halbkugelplatten 14 bei einer speziellen Ausführungsform zusätzlich zu den gleichen (uniformen) Erhebungen 12 weitere Höcker, Buckel oder dergleichen aufweisen.

Im Falle einer Halbkugelplatte 14 mit echt halbkugelförmigen Erhebungen 12 haben diese Erhebungen 12 allesamt denselben Radius, also auch dieselbe Höhe. Aus dem Radius einer halbkugelförmigen Erhebung 12 ergibt sich jeweils der Durchmesser von deren kreisförmiger Grundfläche. Mit Erhebungen 12 mit durchgängig gleichem Radius sowie durchgängig gleicher kreisförmigen Grundfläche und durchgängig gleichem Krümmungsradius der Erhebungen 12 ergeben sich durchgängig uniforme (gleichförmige) Erhebungen 12. Für alle anderen möglichen Formen der Erhebungen 12 gilt dies entsprechend.

Diese uniformen Erhebungen 12 sind mit Abstand voneinander und bei der gezeigten Ausführungsform in grundsätzlich optionaler Weise in einem gleichmäßigen matrixartigen Raster über die Fläche der Halbkugelplatte 14 verteilt. Das gleichmäßige Raster (Erhebungsraster) zeichnet sich dadurch aus, dass sich bei einer gedachten Verbindungslinie zwischen einer Erhebung 12 und einer benachbarten weiteren Erhebung 12 (zum Beispiel einer Verbindungslinie zwischen den Scheitelpunkten dieser Erhebungen 12 oder einer Verbindungslinie zwischen den Zentren der Scheitelflächen dieser Erhebungen 12) ein Abstand zwischen diesen Erhebungen 12 ergibt, der sich bei einem Fortschreiten entlang der Verbindungslinie stets wiederholt (Rastermaß). Innerhalb des Erhebungsrasters kommen unterschiedliche Verbindungslinien und damit unterschiedliche Richtungen von Verbindungslinien in Betracht. Der sich stets wiederholende Abstand gilt entlang aller solcher Verbindungslinien, wobei sich bei parallelen Verbindungslinien gleiche Abstände zwischen je zwei Erhebungen 12 ergeben und sich bei nicht parallelen Verbindungslinien auch Unterschiede zwischen den Abständen zwischen je zwei Erhebungen 12 entlang einer ersten Verbindungslinie und entlang einer dazu nicht parallelen zweiten Verbindungslinie ergeben können.

Als Materialien für eine Halbkugelplatte 14 kommen beispielsweise die folgenden Materialien in Betracht: Kunststoffe wie zum Beispiel PP, PE, PS, PVC, PMMA, PC, PET und Biopolymere, Verbundwerkstoffe, wie zum Beispiel CFK, GFK, Litecor, Metallverbundstoffe und Organobleche, Papier, Gussmaterialien, wie zum Beispiel Harze, Beton, Gips und Metall, sowie Metalle, wie zum Beispiel Stahl, Titan, ALU, Kupfer, Messing usw.

Für besondere Aufgabenstellungen sind auch Schaummaterialien, wie XPS-Schaum, PE-Schaum, PP-Schaum, PET-Schaum, PUR-Schaum usw. einsetzbar.

Die Darstellung in Figur 1 zeigt isometrische Ansichten der Halbkugelplatten 14. Die in Figur 1 im unteren Bereich gezeigte Halbkugelplatte 14 ist in einer Orientierung gezeigt, bei welcher der Blick auf einen jeweils sichtbaren Teil der konvexen Oberflächen (Außenoberfläche) der von der Halbkugelplatte 14 umfassten Erhebungen 12 fällt. Die in Figur 1 im oberen Bereich gezeigte Halbkugelplatte 14 ist in einer Orientierung gezeigt, bei welcher der Blick in einen jeweils sichtbaren Teil der konkaven Oberflächen (Innenoberfläche) der von der Halbkugelplatte 14 umfassten Erhebungen 12 fällt.

Es sei hier bereits darauf hingewiesen, dass die gezeigte Anordnung der Erhebungen 12 relativ zueinander auf der Fläche der Platte 10 nur eine beispielhafte Anordnung ist. Andere Anordnungen sind ebenso denkbar und zumindest einzelne besonders bevorzugte Anordnungen werden im Weiteren gezeigt.

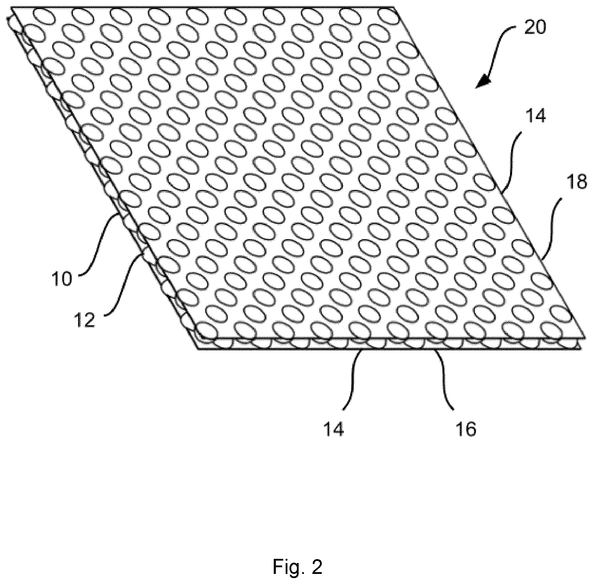

In der Darstellung in Figur 2 sind die dort gezeigten Halbkugelplatten 14 zur Unterscheidung mit weiteren Bezugsziffern bezeichnet: erste Halbkugelplatte 16; zweite Halbkugelplatte 18. Die erste und die zweite Halbkugelplatte 16, 18 sind in ihrer Geometrie sowie der Anzahl und der Anordnung der Erhebungen 12 identisch, nämlich zumindest insoweit identisch, als sie demselben Herstellungsvorgang entstammen, also zum Beispiel aus derselben Form oder aus gleichen Formen stammen, oder Abschnitte von zum Beispiel aus derselben Form oder aus gleichen Formen stammenden Halbkugelplatten 14 darstellen.

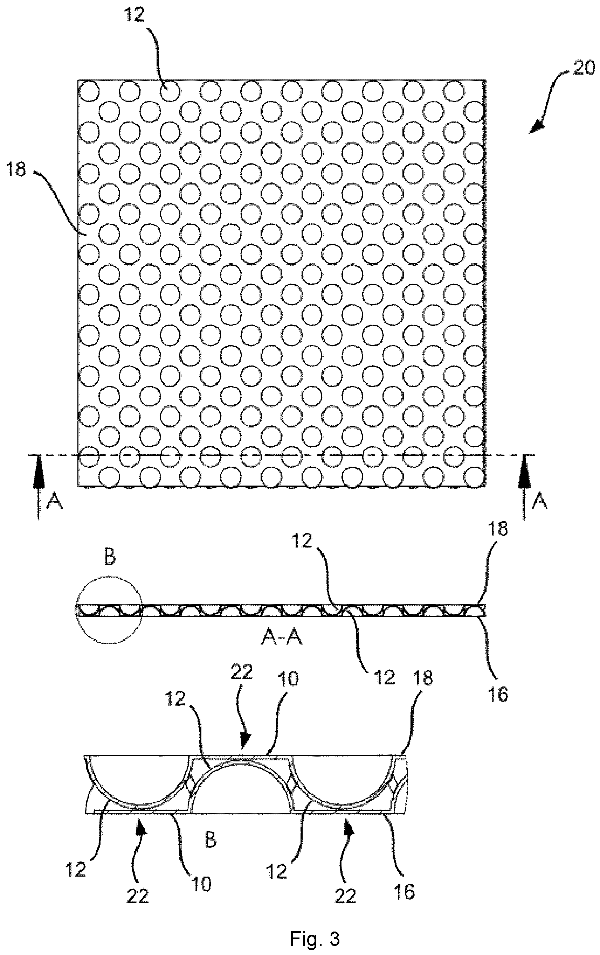

Genau eine Halbkugelplatte 14; 16, 18 bildet einen Teil des hier vorgeschlagenen und im Folgenden als Kernelement 20 bezeichneten Kern- oder Kernelements für sogenannte Sandwichelemente. Genau eine erste Halbkugelplatte 16 und genau eine zweite Halbkugelplatte 18 bilden zusammen eine einfache Form eines hier vorgeschlagenen Kernelements 20 für Sandwichelemente. Bei einer Kombination einer ersten Halbkugelplatte 16 und einer zweiten Halbkugelplatte 18 sind die beiden Halbkugelplatten 16, 18 einander mit den Außenoberflächen ihrer Erhebungen 12 zugewandt. Bei einer mit einer ersten Halbkugelplatte 16 kombinierten zweiten Halbkugelplatte 18 liegt jede Erhebung 12 der ersten Halbkugelplatte 16 in einem freien Raum zwischen einander benachbarten Erhebungen 12 der zweiten Halbkugelplatte 18. Genauso liegt bei der mit der ersten Halbkugelplatte 16 kombinierten zweiten Halbkugelplatte 18 jede Erhebung 12 der zweiten Halbkugelplatte 18 in einem freien Raum zwischen einander benachbarten Erhebungen 12 der ersten Halbkugelplatte 16. Mit ihrem Scheitelpunkt oder ihrer Scheitelfläche liegt jede Erhebung 12 einer der Halbkugelplatten 16, 18 an einem ebenen Abschnitt der Platte 10 der jeweils anderen Halbkugelplatte 16, 18 an. Dort ergibt sich im Falle eines Scheitelpunkts eine punktförmige oder im Wesentlichen punktförmige Kontaktstelle 22 und im Falle einer Scheitelfläche eine kreisförmige Kontaktstelle 22. An diesen Kontaktstellen 22 (Fig. 3) und nur an diesen Kontaktstellen 22 (abgesehen von einem später erläuterten optionalen randseitigen Verschluss) sind die beiden Halbkugelplatten 16, 18 miteinander verbunden, zum Beispiel durch Kleben. Andere mögliche Verbindungsarten sind zum Beispiel Schweißen, Schrauben, Nähen, Nieten, Pressen und Klemmen.

Zur Darstellung dieser Anordnung der Erhebungen 12 zweier zu einem Kernelement 20 kombinierter Halbkugelplatten 14; 16, 18 relativ zueinander zeigt die Darstellung in Figur 3 (oben) eine Draufsicht auf ein mit zwei Halbkugelplatten 14; 16, 18 gebildetes Kernelement 20, (in der Mitte) einen Längsschnitt durch das Kernelement 20 und (unten) einen vergrößerten Ausschnitt aus dem Längsschnitt.

Figur 3 zeigt im oberen Bereich eine Draufsicht auf ein mit zwei Halbkugelplatten 14; 16, 18 gebildetes Kernelement 20. In der Draufsicht ist nur eine der Halbkugelplatten 14 sichtbar, nämlich die im Folgenden - nur zur sprachlichen Unterscheidung und ohne Beschränkung auf eine spätere Orientierung / Einbaulage - auch als obere Halbkugelplatte 18 bezeichnete zweite Halbkugelplatte 18. Die Erhebungen 12 der sichtbaren/oberen Halbkugelplatte 18 erscheinen in dieser Darstellung als Kreise. Alle Kreise haben denselben Durchmesser. Der Blick auf die Ebene der oberen Halbkugelplatte 18 geht auf die Innenoberflächen der Erhebungen 12. In der Darstellung in Figur 3 ist im oberen Bereich im Interesse der Übersichtlichkeit der Darstellung nur eine der Erhebungen 12 bezeichnet. Bei der Blickrichtung auf die sichtbare/obere Halbkugelplatte 18 können die davon umfassten Erhebungen 12 grundsätzlich auch als Vertiefungen bezeichnet und angesehen werden.

Im mittleren Bereich zeigt die Darstellung in Figur 3 einen Längsschnitt durch das Kernelement 20 entlang der Schnittebene A-A. Im unteren Bereich zeigt die Darstellung in Figur 3 eine Vergrößerung des mit "B" bezeichneten Abschnitts aus dem Längsschnitt entlang der Schnittebene A-A.

In den beiden Schnittdarstellungen, speziell in der Vergrößerung, wird deutlich, dass jede Erhebung 12 der ersten Halbkugelplatte 16 in einem freien Raum zwischen einander benachbarten Erhebungen 12 der zweiten Halbkugelplatte 18 liegt. In der vergrößerten Darstellung im unteren Bereich von Figur 3 liegt die einzige vollständig gezeigte Erhebung 12 der - ebenfalls nur zur sprachlichen Unterscheidung und ohne Beschränkung auf eine spätere Orientierung/Einbaulage - im Weiteren auch als untere Halbkugelplatte 16 bezeichneten ersten Halbkugelplatte 16 zwischen zwei seitlich angrenzenden Erhebungen 12 der oberen Halbkugelplatte 18. Hinter (bei einer Blickrichtung in die Zeichenebene) der einzigen vollständig gezeigten Erhebung 12 der unteren Halbkugelplatte 16 ist noch eine weitere Erhebung 12 der oberen Halbkugelplatte 18 erkennbar. Auch diese grenzt in der Ebene des Kernelements 20 seitlich an die einzige in der Vergrößerung vollständig gezeigte Erhebung 12 der unteren Halbkugelplatte 16 an. Gleiches gilt entsprechend für eine vor der Schnittebene liegende und entsprechend nicht gezeigte weitere Erhebung 12 der oberen Halbkugelplatte 18. Insgesamt liegt damit die einzige in der Darstellung in Figur 3 vollständig gezeigte Erhebung 12 der unteren Halbkugelplatte 16 in einem freien Raum zwischen benachbarten Erhebungen 12 der oberen Halbkugelplatte 18. Dies gilt entsprechend für alle Erhebungen 12 der unteren Halbkugelplatte 16. Bei randseitigen Erhebungen 12 (am Rand der Halbkugelplatte 16; am Rand des Kernelements 20) ist eine Erhebung 12 der unteren Halbkugelplatte 16 gegebenenfalls von einer geringeren Anzahl von Erhebungen 12 der oberen Halbkugelplatte 18 eingeschlossen, als dies bei einer in der Fläche des Kernelements 20 befindlichen Erhebung 12 der Fall ist.

Für die Erhebungen 12 der oberen Halbkugelplatte 18 gilt das oben für die Erhebungen 12 der unteren Halbkugelplatte 16 Gesagte entsprechend.

Bei der in Figur 3 gezeigten Konfiguration liegt die einzig vollständig gezeigte Erhebung 12 der unteren Halbkugelplatte 16 zwischen jeweils einer rechts und links benachbarten Erhebung 12 der oberen Halbkugelplatte 18 sowie zwischen jeweils einer vorne und hinten benachbarten Erhebung 12 der oberen Halbkugelplatte 18. Auch dies gilt entsprechend für alle anderen Erhebungen 12 der unteren Halbkugelplatte 16 (bei Berücksichtigung eventueller randseitiger Unterschiede). Bei der gezeigten Ausführungsform gilt dies auch für alle Erhebungen 12 der oberen Halbkugelplatte 18 entsprechend.

Jede Erhebung 12, also jede Erhebung 12 der unteren Halbkugelplatte 16 und jede Erhebung 12 der oberen Halbkugelplatte 18, kommt beim Kombinieren der beiden Halbkugelplatten 16, 18 mit ihrem Scheitelpunkt oder ihrer Scheitelfläche mit einem von anderen Erhebungen 12 eingegrenzten ebenen Abschnitt der Platte 10 der jeweils anderen Halbkugelplatte 16, 18 in Kontakt und dort ergeben sich jeweils punktförmige oder im Wesentlichen punktförmige Kontaktstellen 22 oder kreisförmige Kontaktstellen 22. Durch den Kontakt der Erhebungen 12 an ihrem Scheitelpunkt oder ihrer Scheitelfläche mit der (dann innenliegenden) Oberfläche eines ebenen Abschnitts der Platte 10 der jeweils anderen Halbkugelplatte 16, 18 ergibt sich die wirksame Stärke (Dicke, Höhe) des Kernelements 20. Eine Höhe der Erhebungen 12 bestimmt die Stärke des Kernelements 20. Die tatsächliche Stärke ergibt sich jeweils als Summe des Radius bzw. der Höhe der Erhebungen 12 zuzüglich der Stärke der Platten 10 der beiden Halbkugelplatten 16, 18.

Zum Kombinieren der beiden Halbkugelplatten 16, 18 zum Erhalt eines Kernelements 20 sind die beiden Halbkugelplatten 16, 18 an diesen Kontaktstellen 22 zum Beispiel durch Kleben verbunden. Die Kontaktstellen 22 sind in dem vergrößerten Abschnitt der Schnittdarstellung bezeichnet. Dabei ist zu betonen, dass die Bezugspfeile nur auf die Kontaktstellen 22 weisen und diese nicht unmittelbar bezeichnen. Die Kontaktstellen 22 liegen zwischen den einander zugewandten Oberflächen der beiden Halbkugelplatten 16, 18 an den durch die Pfeile bezeichneten Orten.

Entlang der Ebene eines Kernelements 20 ergibt sich eine Vielzahl solcher Kontaktstellen 22. Jede Kontaktstelle 22 ist auch ein Krafteinleitungspunkt zur Kraftübertragung von einer Halbkugelplatte 16, 18 zur anderen Halbkugelplatte 16, 18. Die Geometrie jeder Erhebung 12 (halbkugelförmig, kugelsegmentförmig, kugelschichtförmig etc.) gewährleistet eine besonders hohe Festigkeit, insbesondere Druckfestigkeit, des aus zwei Halbkugelplatten 16, 18 gebildeten Kernelements 20. Bei einer aus Richtung einer Normalen auf eine der großen Oberflächen des Kernelements 20 ausgeübten Kraft auf das Kernelement 20 verteilt jede Erhebung 12 die wirkenden Kräfte ausgehend von der Kontaktstelle 22 entlang der Umfangslinie der Erhebung 12 und leitet die wirkenden Kräfte in die einstückig an die Erhebung 12 anschließende Platte 10.

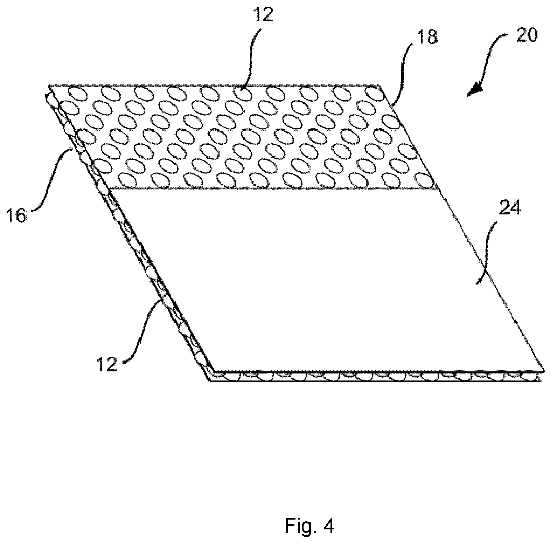

Ein besonderer Vorteil des hier vorgeschlagenen Kernelements 20 besteht darin, dass dieses bereits ohne zusätzliche äußere Deckschichten stabil ist. Gleichwohl können auf die großen Oberflächen des Kernelements 20 einseitig oder beidseitig Deckschichten 24 aufgebracht werden, wie dies beispielhaft in der Darstellung in Figur 4 gezeigt ist, nämlich zum Beispiel in grundsätzlich an sich bekannter Art und Weise aufgeklebt werden oder auf andere geeignete Weise lösbar oder unlösbar mit einer nach außen weisenden Oberfläche des Kernelements verbunden sein. Weil das Kernelement 20 bereits alleine, also ohne zumindest eine äußere Deckschicht, stabil ist, besteht keine Notwendigkeit hinsichtlich einer besonderen Dehnsteifigkeit der oder jeder Deckschicht 24. Die Auswahl der oder jeder auf dem hier vorgeschlagenen Kernelement 20 aufgebrachten Deckschicht 24 kann daher ganz oder teilweise nach anderen Gesichtspunkten als der Stabilität eines mit dem Kernelement 20 gebildeten Sandwichelements erfolgen. Die Auswahl kann zum Beispiel ganz oder teilweise von optischen und/oder haptischen Eigenschaften einer Deckschicht 24 bestimmt sein. Genauso können Kriterien wie thermische Isolation, Brandschutz/Brandhemmung, akustische Isolation und dergleichen Berücksichtigung finden. Unabhängig von allem Vorstehenden lässt sich selbstverständlich durch Aufbringen zumindest einer entsprechenden Deckschicht 24 auch eine Gesamtstabilität des mit dem hier vorgeschlagenen Kernelement 20 gebildeten Sandwichelements erhöhen.

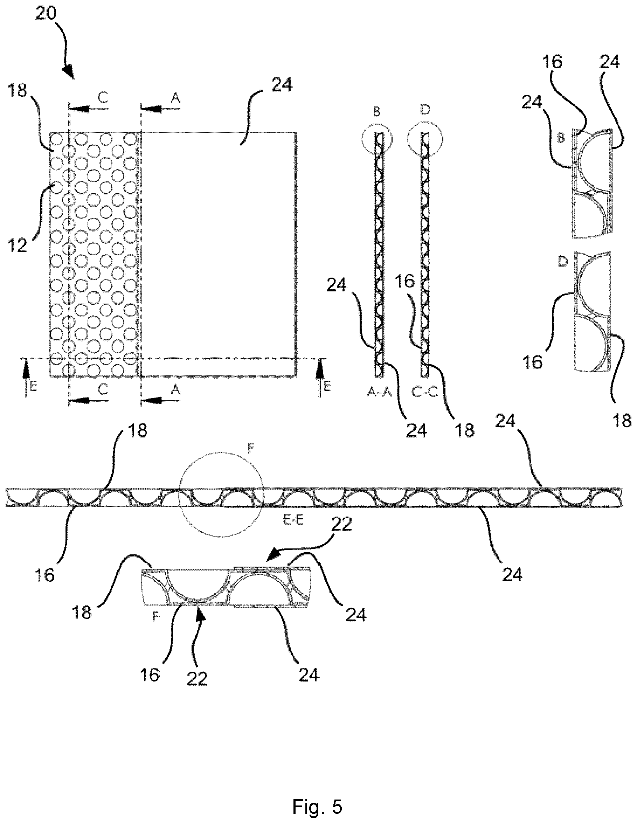

Die Darstellung in Figur 5 zeigt - mit ähnlichen Ansichten und ähnlichen Schnitten wie die Darstellung in Figur 3 - eine Ausführungsform des hier vorgeschlagenen Kernelements 20 mit beidseitig aufgebrachten Deckschichten 24. Die Deckschichten 24 erstrecken sich dabei - hier nur zum Zwecke der Veranschaulichung - nur über einen Teil der gezeigten Fläche des Kernelements 20. Üblicherweise ist eine Aufbringung solcher Deckschichten 24 auf der gesamten Oberfläche oder zumindest im Wesentlichen der gesamten Oberfläche des Kernelements 20 vorgesehen.

Die Darstellung in Figur 5 zeigt - zunächst von links nach rechts - eine Draufsicht auf ein Kernelement 20 gemäß Figur 3, wobei auf einen Teil der sichtbaren Oberfläche des Kernelements 20 eine Deckschicht 24 aufgebracht ist. Auf der nicht sichtbaren Oberfläche des Kernelements 20 ist ebenfalls eine Deckschicht 24 aufgebracht. Rechts neben der Darstellung des Kernelements 20 in Draufsicht sind zwei Längsschnitte durch das Kernelement 20 entlang der Schnittlinien A-A und C-C zeigt. Die Schnittlinie A-A liegt im Bereich der aufgebrachten Deckschichten 24. Die Schnittlinie C-C liegt im Bereich außerhalb der aufgebrachten Deckschichten 24. Der Schnitt entlang dieser Schnittlinie entspricht daher der entsprechenden Darstellung in Figur 3. Bei den Schnittdarstellungen sind im Interesse der Übersichtlichkeit der Darstellung nur die jeweils außen liegenden Schichten bezeichnet, also einerseits die Deckschichten 24 und andererseits die untere Halbkugelplatte 16 und die obere Halbkugelplatte 18. Ganz rechts sind in Figur 5 Ausschnittsvergrößerungen der in den Längsschnitten mit "B" und "D" bezeichneten Bereiche gezeigt. Die Vergrößerung aus dem mit "D" bezeichneten Bereich entspricht der Darstellung in Figur 3. Die Vergrößerung aus dem mit "B" bezeichneten Bereich zeigt, wie die Deckschichten 24 auf den ebenen Abschnitten der Platten 10 der Halbkugelplatten 16, 18 liegen, nämlich flach und in einer zur Ebene der Platten 10 parallelen Ebene.

Nach unten an die bisher erläuterten Bereiche der Darstellung in Figur 5 anschließend zeigt diese einen Längsschnitt durch das Kernelement 20 mit aufgebrachten Deckschichten 24 im Bereich der Schnittlinie E-E. Diese Schnittlinie schneidet die Schnittlinien A-A und C-C und der Schnitt erfasst daher einen Bereich mit aufgebrachten Deckschichten 24 und einen Bereich ohne aufgebrachte Deckschichten 24. Ganz unten in der Darstellung in Figur 5 ist eine Vergrößerung des in dem Längsschnitt entlang der Schnittlinie E-E mit "F" bezeichneten Bereichs gezeigt. Auch dort ist - wie in der Vergrößerung des mit "B" bezeichneten Bereichs - erkennbar, dass die Deckschichten 24 flach und in einer zur Ebene der Platten 10 der Halbkugelplatten 16, 18 parallelen Ebene auf den Halbkugelplatten 16, 18 liegen. Dort sind sie zum Beispiel mit den nach außen weisenden Oberflächen der Halbkugelplatten 16, 18 verklebt oder in sonst geeigneter Weise mit diesen lösbar oder nicht lösbar verbunden.

In den Schnittdarstellungen ist erkennbar, dass außen auf ein mit Halbkugelplatten 16, 18 gebildetes Kernelement 20 aufgebrachte Deckschichten 24 die Rück- oder Innenseiten der Erhebungen 12 (also die aufgrund der Erhebungen 12 resultierenden Vertiefungen) abdecken. Dadurch entsteht eine durchgängig geschlossene Oberfläche auf dem Kernelement 20.

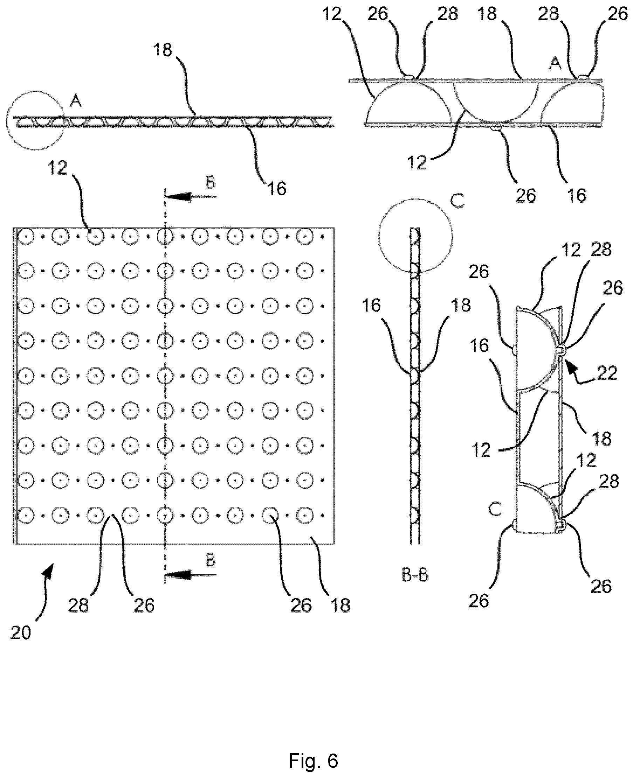

Die Darstellung in Figur 6 zeigt eine besondere Ausführungsform eines mit zwei Halbkugelplatten 16, 18 der oben beschriebenen Art gebildeten Kernelements 20. Die Darstellung zeigt im linken unteren Bereich eine Draufsicht auf ein solches Kernelement 20. Daran schließen oben eine Seitenansicht auf das Kernelement 20 und rechts ein Schnitt durch das Kernelement 20 (Schnitt entlang der Schnittlinie B-B) an. In der Seitenansicht und in der Schnittdarstellung sind einzelne Bereiche hervorgehoben und diese sind neben der Seitenansicht und neben der Schnittdarstellung vergrößert gezeigt.

Die Besonderheit dieser Ausführungsform besteht darin, dass zumindest eine Vielzahl der Erhebungen 12, insbesondere alle Erhebungen 12, mit der restlichen Erhebung 12 einstückig verbundene, radial nach außen weisende und im Folgenden als Noppe 26 bezeichnete und höckerartige Abstellungen tragen. Eine Erhebung 12 mit einem Scheitelpunkt trägt - wie gezeigt - genau eine Noppe 26. Eine Erhebung 12 mit einer Scheitelfläche - nicht gezeigt - trägt zumindest eine Noppe 26, insbesondere im Zentrum der Scheitelfläche, oder eine Mehrzahl von Noppen 26, zum Beispiel äquidistant entlang der Umfangslinie der Scheitelfläche verteilt. Noppen 26 auf den Scheitelpunkten der Erhebungen 12 sind vor allem in den Vergrößerungen der Seitenansicht und der Schnittdarstellung gut erkennbar.

Die Noppen 26 der Erhebungen 12 einer Halbkugelplatte 16, 18 reichen durch zu deren Aufnahme vorgesehene Öffnungen 28 in der jeweils anderen Halbkugelplatte 16, 18 hindurch. Die Weite und die Geometrie der Öffnungen 28 sind auf die Querschnittsgeometrie der Noppen 26 abgestimmt. Die Öffnungen 28 nehmen die Noppen 26 (jeweils eine Öffnung 28 genau eine Noppe 26) zumindest formschlüssig auf.

Aufgrund der zumindest formschlüssigen Aufnahme der Noppen 26 in den Öffnungen 28 sind in der Darstellung der Draufsicht auf ein solches Kernelement 20 die Öffnungen 28 von den Noppen 26 kaum zu unterscheiden. Bezüglich der in der Draufsicht einzig sichtbaren oberen Halbkugelplatte 18 fällt dort der Blick auf die Innenoberfläche der Erhebungen 12 und im Zentrum der Erhebungen 12 sind die Noppen 26 (gewissermaßen die Rückseiten der Noppen 26 oder die Innenoberflächen der Noppen 26) erkennbar. Im Interesse eines Erhalts der Übersichtlichkeit der Darstellung ist dies nur einmal bezeichnet. Die Noppen 26 der (in der Draufsicht nicht sichtbaren) unteren Halbkugelplatte 16 sind von den Öffnungen 28 in der oberen Halbkugelplatte 18 aufgenommen. In der Darstellung erscheint dies als ein Kreis mit einem im Vergleich zur Darstellung der Erhebungen 12 der oberen Halbkugelplatte 18 deutlich geringeren Durchmesser. Im Interesse eines Erhalts der Übersichtlichkeit der Darstellung ist auch dies nur einmal bezeichnet und die betreffenden Bezugslinien weisen im Grunde auf den selben Ort, nämlich einmal auf das Zentrum des Kreises und die dortige Noppe 26 und einmal auf die Außenumfangslinie des Kreises und die dadurch dargestellte Öffnung 28.

Die Verbindung zweier Halbkugelplatten 16, 18 mittels der davon umfassten Noppen 26 und Öffnungen 28 bewirkt zumindest eine Justierung der Halbkugelplatten 16, 18 relativ zueinander in einer vor allem durch die Position der Öffnungen 28 bestimmten Lage. Alle Öffnungen 28 einer jeden Halbkugelplatte 16, 18 sind in einem gleichmäßigen matrixartigen Raster entlang der Fläche der jeweiligen Halbkugelplatte 16, 18 verteilt. Dieses Raster entspricht dem Erhebungsraster, also dem Raster der Verteilung der Erhebungen 12 derselben Halbkugelplatte 16, 18, und damit auch dem Raster der Noppen 26 derselben Halbkugelplatte 16, 18. Weil bei einer Kombination zweier Halbkugelplatten 16, 18 zu einem Kernelement 20 zwei im weiter oben skizzierten Sinne gleiche Halbkugelplatten 16, 18 kombiniert werden, ist das Raster der Noppen 26 und Öffnungen 28 beider Halbkugelplatten 16, 18 gleich. Jede Noppe 26 einer der Halbkugelplatten 16, 18 findet damit eine zugehörige, passende Öffnung 28 in der jeweils anderen Halbkugelplatte 16, 18.

Bei der in Figur 6 gezeigten Ausführungsform sind die Öffnungen 28 einer jeden Halbkugelplatte 16, 18 symmetrisch zwischen den Noppen 26 derselben Halbkugelplatte 16, 18 angeordnet. Dies ist die bevorzugte Ausführungsform, aber gleichwohl eine grundsätzlich optionale Ausführungsform.

Eine Verbindung zweier Halbkugelplatten 16, 18 mittels der davon umfassten Noppen 26 und Öffnungen 28 kann bereits eine ausreichende Verbindung zum Erhalt eines aus den beiden auf diese Weise miteinander verbundenen Halbkugelplatten 16, 18 gebildeten Kernelements 20 darstellen. Bevorzugt, aber grundsätzlich optional, sind die Halbkugelplatten 16, 18 im Bereich der Noppen 26 und Öffnungen 28 zusätzlich miteinander verbunden, zum Beispiel durch Verkleben oder durch Aufschmelzen von durch die Öffnungen 28 hindurchreichenden Abschnitten der Noppen 26. Zum Zwecke eines solchen Aufschmelzens haben die Noppen 26 eine wirksame Höhe, welche zumindest größer ist als die Dicke der Platte 10 im Bereich der Öffnungen 28. Beim Aufschmelzen ergibt sich regelmäßig zumindest abschnittsweise eine einstückige Verbindung der Schmelze der Noppen 26 mit dem angrenzenden Bereich der Öffnungen. Zumindest ergibt sich beim Aufschmelzen der durch die Öffnungen 28 hindurchreichenden Abschnitte der Noppen 26 eine dortige Verformung der Noppen 26, welche nach Art einer Niet-Verbindung ein Lösen der Noppen 26 aus der jeweiligen Öffnung 28 verhindert.

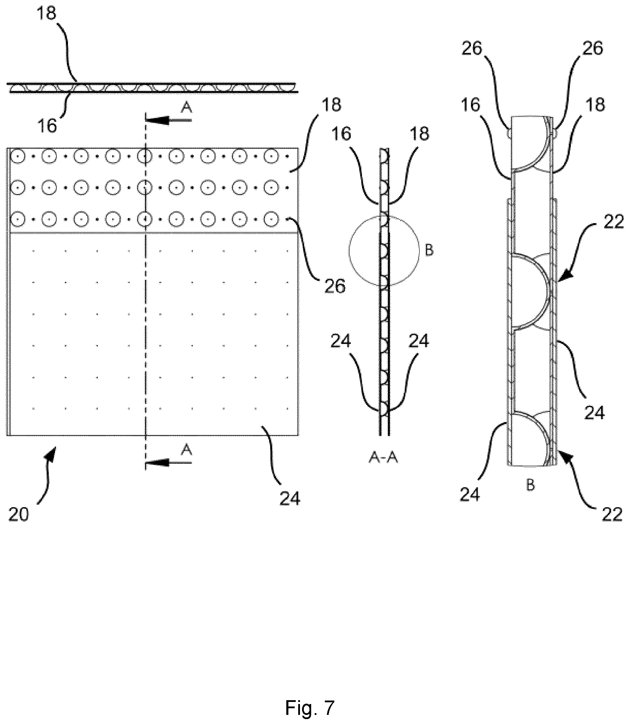

Ein Kernelement 20 mit mittels Noppen 26 und Öffnungen 28 verbundenen oder zumindest vorjustierten Halbkugelplatten 14; 16, 18 wird optional - genauso wie zuvor anhand der Darstellungen in Figur 4 und Figur 5 beschrieben - einseitig oder beidseitig mit einer Deckschicht 24 versehen. Ein Beispiel zeigt die Darstellung in Figur 7. Zur Vermeidung unnötiger Wiederholungen wird bezüglich der Erläuterung der gezeigten Einzelheiten auf die Darstellungen in Figur 6 und Figur 5 verwiesen.

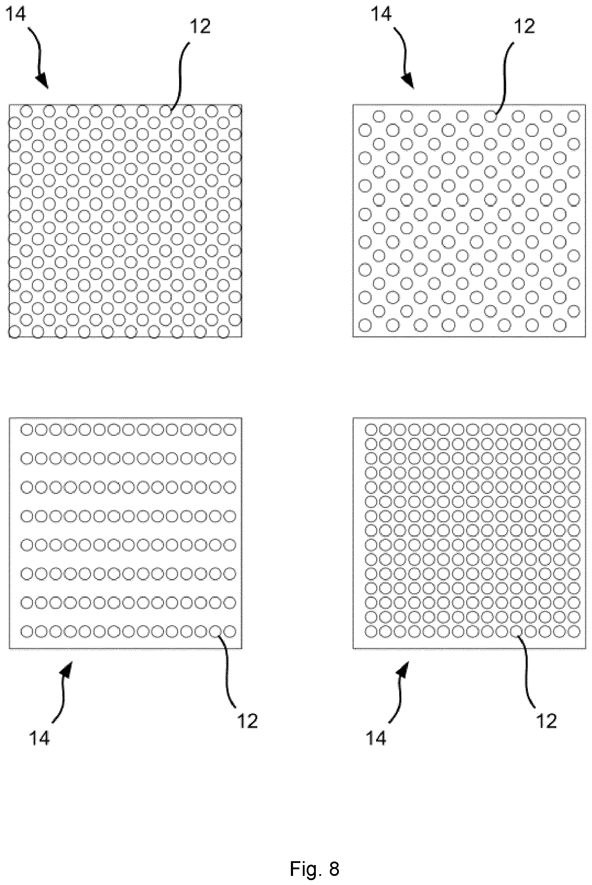

Die Darstellung in Figur 8 veranschaulicht, dass bezüglich der Anzahl und der Anordnung der Erhebungen 12 einer Halbkugelplatte 14 unterschiedliche Muster (unterschiedliche Raster/Erhebungsraster) in Betracht kommen - mit und ohne Noppen 26 und Öffnungen 28 -, wobei die in der Darstellung in Figur 8 gezeigten Anordnungen ausdrücklich nur beispielhaft und nicht abschließend sind.

Damit ist die Beschreibung der grundsätzlichen Struktur sowie einer speziellen Ausführungsform (mit Noppen 26 und Öffnungen 28) einer Halbkugelplatte 14, die in einem Kernelement 20 als untere Halbkugelplatte 16 oder obere Halbkugelplatte 18 in Betracht kommt, sowie eines Kernelements 20 mit zwei Halbkugelplatte 14 abgeschlossen.

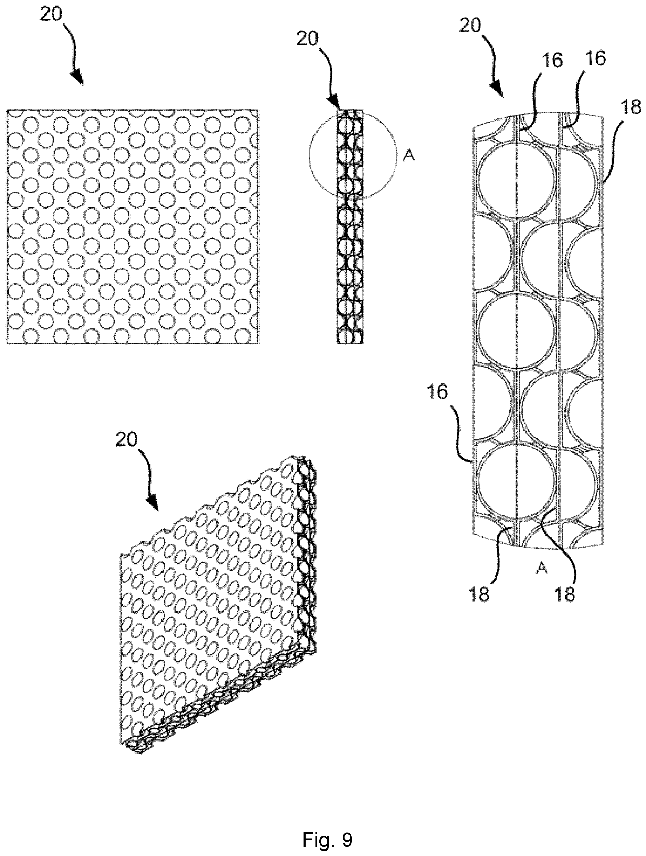

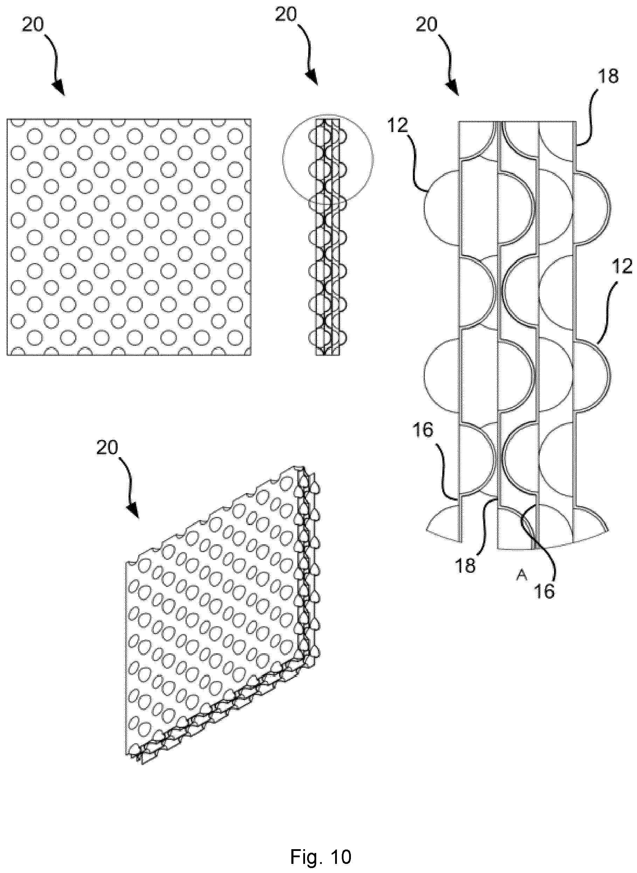

In den Darstellungen in Figur 9 und Figur 10 ist eine spezielle Ausführungsform eines Kernelements 20 gezeigt, nämlich ein mehrere Ebenen umfassendes Kernelement 20.

Ein solches mehrere Ebenen umfassendes Kernelement 20 ist zum Beispiel (Fig. 9) durch eine Verbindung mehrerer Kernelemente 20 der bisher beschriebenen Art gebildet. Jeweils zwei Kernelemente 20 sind dabei mittels der einander zugewandten großen Oberflächen miteinander verbunden, zum Beispiel durch Verkleben, Verschweißen, Verschmelzen oder dergleichen. Die Darstellung in Figur 9 zeigt eine Draufsicht, eine Schnittdarstellung, einen vergrößerten Ausschnitt aus der Schnittdarstellung und eine isometrische Ansicht eines solchen Kernelements 20. Beispielhaft gezeigt ist ein Kernelement 20 mit drei Ebenen, wobei jede Ebene durch ein Kernelement 20 der zuvor beschriebenen Art gebildet ist. Das in Figur 9 gezeigte Kernelement 20 umfasst entsprechend drei untere Halbkugelplatten 16 und drei obere Halbkugelplatten 18, wobei jeweils - wie bisher - eine untere Halbkugelplatte 16 und eine obere Halbkugelplatte 18 eine Ebene in dem Kernelement 20 bilden.

Grundsätzlich sind auch mehr oder weniger als zwei Ebenen denkbar, zum Beispiel fünf, zehn oder hundert Ebenen, und ebenso von der Erfindung umfasst. In Bezug auf Einzelheiten der einzelnen Ebenen kann auf die Beschreibung eines genau zwei Halbkugelplatten 14; 16, 18 umfassenden Kernelements 20 verwiesen werden. Ein Abschnitt eines Kernelements 20 mit einer höheren Anzahl von Ebenen, zum Beispiel zehn, zwanzig Ebenen oder dergleichen, kann zum Beispiel als (Trag-)Strukturelement (Karosserieteil, Tragwerksbauteil, Schockabsorbersystem) fungieren.

Die Darstellung in Figur 10 zeigt ebenfalls ein mehrere Ebenen umfassendes Kernelement 20. Die Besonderheit hier besteht darin, dass zumindest eine Halbkugelplatte 14 - anders als bisher beschrieben - nicht nur in eine Richtung weisende Erhebungen 12, sondern in entgegengesetzte Richtungen weisende Erhebungen 12 aufweist. Eine solche Halbkugelplatte 14 besitzt eine Außenoberfläche wie zwei miteinander verbundene Halbkugelplatten 14 der bisher beschriebenen Art, wobei die Verbindung mittels der jeweiligen Rückseiten erfolgt, sodass die Erhebungen 12 jeweils nach außen weisen. Soweit die Erhebungen 12 solcher Halbkugelplatten 14 beim Kombinieren zweier Halbkugelplatten 14 einander zugewandt sind, gilt auch für eine solche Kombination die gesamte vorangehende Beschreibung, so dass zur Vermeidung von Wiederholungen darauf verwiesen werden kann. Bei zwei miteinander kombinierten, insbesondere durch Kleben oder dergleichen und/oder mittels Noppen 26 und Öffnungen 28 verbundenen, Halbkugelplatten 14 fungiert eine der beiden Halbkugelplatten 14 als untere Halbkugelplatte 16 und die andere Halbkugelplatte 14 als obere Halbkugelplatte 18, so dass auch insoweit auf die vorangehende Beschreibung verwiesen werden kann.

Ein ein- oder mehrschichtiges Kernelement 20 mit einer Halbkugelplatte 14 bzw. Halbkugelplatten 14 mit in entgegengesetzte Richtungen weisenden Erhebungen 12 kann einseitig oder beidseitig mittels einer Halbkugelplatte 14 mit jeweils nur in eine Richtung weisenden Erhebungen 12 oder mit einer Deckschicht 24 abgedeckt sein.

Auch bei einem mehrschichtigen Kernelement 20 mit zumindest einer Halbkugelplatte 14 mit in entgegengesetzte Richtungen weisenden Erhebungen 12 gilt bezüglich der Anzahl der Ebenen und der Verwendbarkeit eines Kernelements 20 mit einer höheren Anzahl von Ebenen das oben Gesagte entsprechend. Die Anzahl der Ebenen ist also grundsätzlich beliebig und als Anwendungsfall kommt zum Beispiel eine Verwendung als (Trag-)Strukturelement in Betracht.

Jetzt wendet sich die Beschreibung möglichen Verwendungszwecken des hier vorgeschlagenen Kernelements 20 zu. Die nachfolgenden Ausführungen gelten für Kernelemente 20 mit Halbkugelplatten 14; 16, 18 mit und ohne Noppen 26 und Öffnungen 28 sowie für einschichtige Kernelemente 20 (Figuren 1 bis 7) und auch für mehrschichtige Kernelemente 20 (Figuren 9, 10).

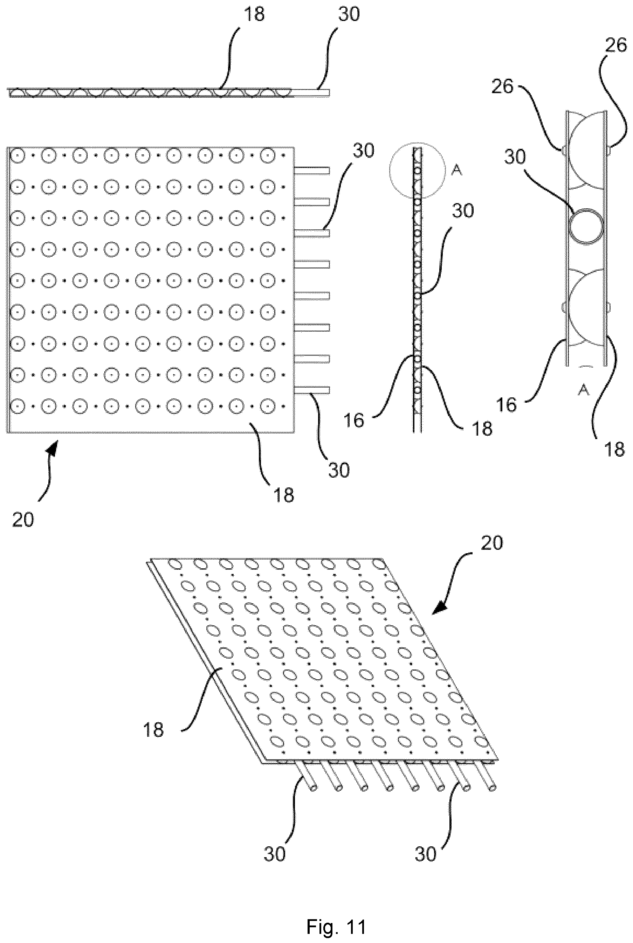

Die Darstellung in Figur 11 zeigt mit ähnlichen Ansichten wie einzelne vorangehende Figuren (Draufsicht, Seitenansicht, Längsschnitt und Vergrößerung aus dem Längsschnitt sowie isometrische Ansicht) ein Kernelement 20 mit im Innern des Kernelements 20 verlaufenden Leitungen 30. Ein solches Kernelement 20 kommt zum Beispiel als Konstruktionsplatte mit Leitungsführungen in Betracht, wobei die Leitungen 30 zum Beispiel Rohrleitungen, Kabel oder dergleichen sind. Die Leitungen 30 verlaufen im Innern des Kernelements 20 und dort einerseits zwischen den ebenen Abschnitten (Platte 10) der Halbkugelplatten 16, 18 und zwischen benachbarten Erhebungen 12 der Halbkugelplatten 16, 18. Das Rastermaß der Erhebungen 12 kann zum Erhalt zusätzlichen Freiraums für die Leitungen 30 oder zum Erhalt von Freiraum für eine größere Anzahl von Leitungen 30 angepasst sein, zum Beispiel in der Art und Weise, wie dies in der Darstellung in Figur 8 exemplarisch dargestellt ist.

Ein Außendurchmesser der Leitungen 30 und ein Abstand zwischen den Halbkugelplatten 16, 18 im Innern des Kernelements 20 sind bevorzugt und in grundsätzlich optionaler Art und Weise aufeinander abgestimmt. Bei einer solchen Ausführungsform fixiert das Kernelement 20 in seinem Innern die Leitungen 20 zumindest reibschlüssig. Zusätzlich oder alternativ sind die Leitungen 30 mit zumindest einer Halbkugelplatte 16, 18 verbunden, zum Beispiel verklebt.

Mittels solcher Leitungen 30 ist ein Kernelement 20 der in dieser Anmeldung beschriebenen Art zum Beispiel als Wand-, Fußboden- oder Deckenheizung - zusammenfassend als Flächenheizung bezeichnet - oder als Teil einer aus mehreren Kernelementen 20 gebildeten Flächenheizung verwendbar. Ein als Flächenheizung oder Teil einer Flächenheizung verwendbares Kernelement 20 kommt genauso für Kühlzwecke in Betracht. Das Kernelement 20 selbst hat keinen Einfluss auf die Funktion und die Funktion als Heizung oder für Kühlzwecke ergibt sich nur durch die jeweilige Temperatur des strömenden Mediums. Entsprechend ist mittels solcher Leitungen 30 ein Kernelement 20 der in dieser Anmeldung beschriebenen Art auch als Wand-, Fußboden- oder Deckenkühlung - zusammenfassend als Flächenkühlung bezeichnet - oder als Teil einer aus mehreren Kernelementen 20 gebildeten Flächenkühlung verwendbar. Eine Verwendung zumindest eines Kernelements 20 als Flächenheizung oder als Flächenkühlung ist Teil der Erfindung.

Genauso ist ein solches Kernelement 20 als Sonnenkollektor oder als Teil eines aus mehreren Kernelementen 20 gebildeten Sonnenkollektors verwendbar. Dann handelt es sich bei den Leitungen 30 um Leitungen 30, durch die ein fließfähiges Medium/ein flüssiger Wärmeträger, zum Beispiel Öl, Wasser oder dergleichen, leitbar ist. Beim Betrieb einer mit zumindest einem solchen Kernelement 20 gebildeten Flächenheizung oder beim Betrieb eines mit zumindest einem solchen Kernelement 20 gebildeten Sonnenkollektors strömt durch die Leitungen 30 ein fließfähiges Medium/ein flüssiger Wärmeträger der oben genannten Art. Eine Verwendung zumindest eines Kernelements 20 als Sonnenkollektor ist Teil der Erfindung.

Bei einem als Sonnenkollektor oder als Teil eines Sonnenkollektors fungierenden Kernelement 20 ist dieses bevorzugt auf der der Sonnenstrahlung zugewandten Oberseite schwarz, zum Beispiel mit einer schwarzen Deckschicht 24 versehen. Bei einer Ausführungsform ohne Deckschicht 24 ist das Kernelement 20 mit einem schwarzen Anstrich oder dergleichen versehen oder aus einem schwarzen Material gefertigt. Als schwarz ist dabei jede Farbgebung oder jede Körperfarbe zu verstehen, welche bei einer Beleuchtung des Kernelements 20 mit zumindest verschiedenen Frequenzen des Lichts dazu führt, dass das Kernelement 20 fast kein Licht zurückwirft.

Generell ist ein Kernelement 20 der in dieser Anmeldung beschriebenen Art auch ohne spezielle Leitungen 30 im Innern des Kernelements 20 von einem flüssigen oder gasförmigen Medium durchströmbar. Dann sind die beiden das Kernelement 20 bildenden Halbkugelplatten 14; 16, 18 an zwei Randseiten, insbesondere an zwei einander gegenüberliegenden Randseiten, in einer für das jeweilige Medium dichten Art und Weise miteinander verbunden (Kantenverschluss), zum Beispiel durch Verkleben, Verschweißen und dergleichen. Das resultierende Kernelement 20 mit den beiden verbleibenden offenen Randseiten ist von einer der offenen Randseiten zur anderen offenen Randseite für das jeweilige Medium durchströmbar.

Auch ein solches Kernelement 20 kommt als Flächenheizung oder -kühlung, als Teil einer aus mehreren Kernelementen 20 gebildeten Flächenheizung oder -kühlung, als Sonnenkollektor oder als Teil eines aus mehreren Kernelementen 20 gebildeten Sonnenkollektors in Betracht. Auch eine Verwendung eines solchen Kernelements 20 in dem genannten Sinne ist Teil der Erfindung.

Bei einer Funktion eines solchen Kernelements 20 als Sonnenkollektor oder als Teil eines aus mehreren Kernelementen 20 gebildeten Sonnenkollektors ist auch ein solches Kernelement 20 bevorzugt im oben beschriebenen Sinne schwarz ausgeführt.

Bei beiden durchströmbaren Ausführungsformen eines Kernelements 20 (mit Leitungen 30; mit Kantenverschluss) kommt auch eine Ausführungsform in Betracht, bei welcher das Kernelement 20 einseitig durchsichtig, also zumindest für Infrarot-Strahlung durchlässig oder im Wesentlichen durchlässig ist. Dann ist eine der Halbkugelplatten 14; 16, 18 in diesem Sinne strahlungsdurchlässig und zum Beispiel aus einem entsprechenden Kunststoff gefertigt.

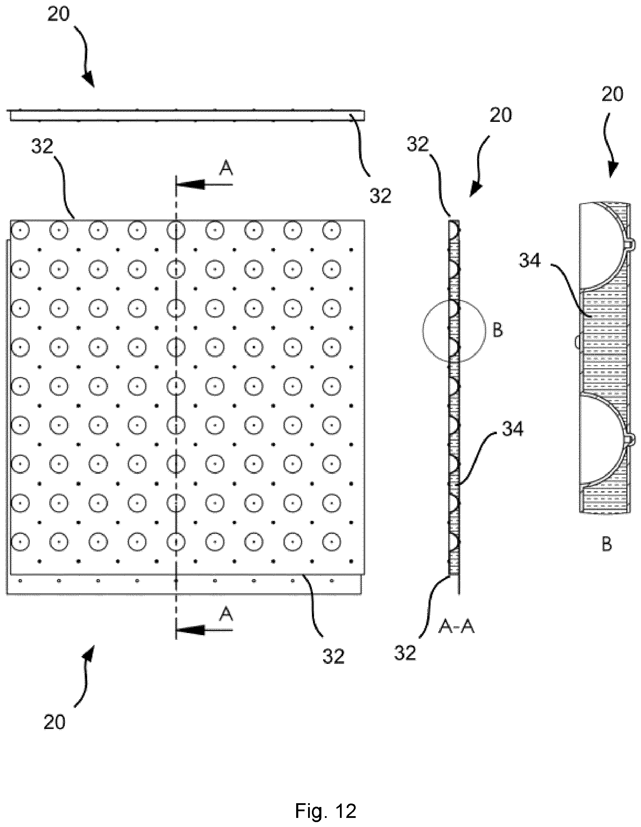

Die Darstellung in Figur 12 zeigt am Beispiel eines Kernelements 20 mit Noppen 26 auf den Erhebungen 12 und Öffnungen 28 in den ebenen Abschnitten der Halbkugelplatten 14; 16, 18 eine spezielle Ausführungsform eines Kernelements 20, bei der die beiden Halbkugelplatten 14; 16, 18 an zwei Randseiten, insbesondere - wie dargestellt - an zwei gegenüberliegenden Randseiten, miteinander verbunden sind.

Die Darstellung in Figur 12 zeigt das Kernelement 20 mit Ansichten wie viele der vorangehenden Figuren (Draufsicht, Seitenansicht, Schnittdarstellung und vergrößerter Ausschnitt aus der Schnittdarstellung). Der randseitige Verschluss ist besonders gut in der oberhalb der Draufsicht auf das Kernelement 20 gezeigten Seitenansicht und speziell auch bei einem Vergleich dieser Seitenansicht mit den Seitenansichten in Figur 6 und Figur 7 erkennbar. Während bei den Seitenansichten in Figur 6 und Figur 7 die Erhebungen 12 im Innern des Kernelements 20 sichtbar sind (aufgrund der dort offenen Randseiten), fällt bei der Seitenansicht in Figur 12 der Blick auf die randseitige Verbindung 32 der beiden Halbkugelplatten 16, 18 und die (sich dahinter und im Innern des Kernelements 20 befindenden) Erhebungen 12 sind nicht sichtbar. In der Draufsicht auf das Kernelement 20 sind die randseitigen Verbindungen 32 aufgrund der Perspektive nicht sichtbar. In der Darstellung ist jeweils der Ort der beiden randseitigen Verbindungen 32 bezeichnet. In der Schnittdarstellung entlang der Schnittlinie A-A sind die randseitigen Verbindungen 32 erkennbar und entsprechend bezeichnet. In der Schnittdarstellung ist mittels einer den freien Bereich im Innern des Kernelements 20 einnehmenden Schraffur gezeigt, dass ein solches Kernelement 20 mit einem Medium 34 gefüllt sein kann und insbesondere von einer der offenen Randseiten zur anderen offenen Randseite (bei der dargestellten Draufsicht von rechts nach links oder von links nach rechts) mittels eines Mediums 34 durchströmbar ist. Als Medium 34 kommt bevorzugt ein flüssiges oder gasförmiges Medium 34 in Betracht. Die randseitigen Verbindung 32 ist für das jeweilige Medium 34 dicht. Eine solche Ausführungsform eines Kernelements 20 kommt als Flächenheizung, -kühlung oder als Sonnenkollektor oder als Element einer Flächenheizung oder -kühlung oder eines Sonnenkollektors in Betracht. Zur Vermeidung unnötiger Wiederholungen wird auf die obigen Ausführungen verwiesen.

Die Darstellung in Figur 12 veranschaulicht bereits in ausreichender Art und Weise eine weitere mögliche Ausführungsform eines Kernelements 20 oder einer Schicht eines mehrschichtigen Kernelements 20. Das in Figur 12 mit der Bezugsziffer 34 bezeichnete Innere des Kernelements 20 kann nämlich auch ein Dämmmaterial 34 sein, insbesondere ein sogenannter PUR-Schaum oder dergleichen. Anstelle einer Füllung mit einem gegebenenfalls strömenden Medium 34 ist das Kernelement 20 dann im Innern mit dem Dämmmaterial 34 gefüllt.

Auch eine solche Ausführungsform kommt für ein Kernelement 20 mit Halbkugelplatten 14; 16, 18 mit und ohne Noppen 26 und Öffnungen 28 in Betracht. Je nach Art des Dämmmaterials 34 und je nach Art der Füllung des Innern des Kernelements 20 mit dem jeweiligen Dämmmaterial kommt eine Befüllung des Innern des Kernelements 20 auch ohne einen randseitigen Verschluss des Kernelements 20 in Betracht, zum Beispiel wenn das Dämmmaterial 34 nicht oder nur wenig fließfähig ist und/oder wenn die Befüllung in einer das Kernelement 20 umgebenden Form erfolgt.

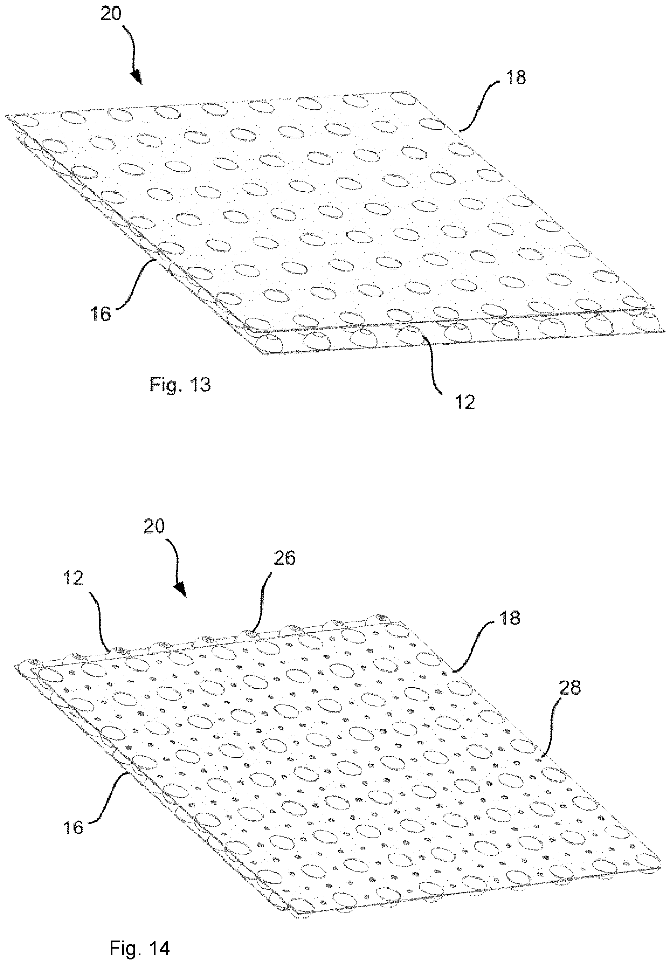

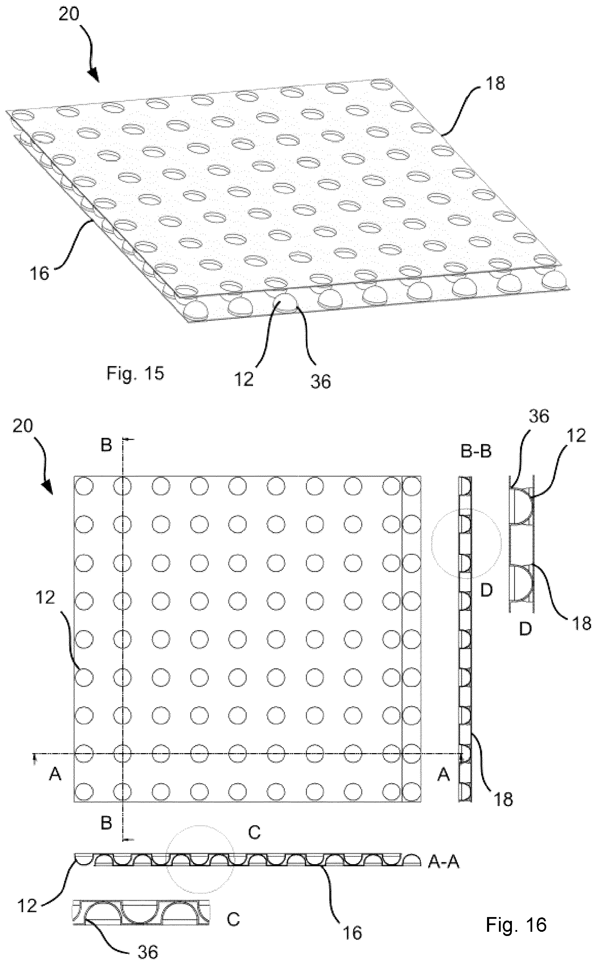

Die weiteren Darstellungen (Figur 13 bis Figur 16) zeigen mögliche Varianten der Form der Erhebungen 12. Alle gezeigten Varianten kommen für alle zuvor und nachfolgend beschriebenen Ausführungsformen in Betracht. Die Darstellung in Figur 13 zeigt ein Kernelement 20 mit abgeflachten Erhebungen 12 (halbkugelschichtförmigen Erhebungen 12). Die abgeflachten Erhebungen 12 weisen keinen Scheitelpunkt, sondern eine Scheitelfläche auf. Mit diesen liegt jede Erhebung 12 an einem ebenen Abschnitt der jeweils anderen Halbkugelplatte 14; 16, 18 an. Die Darstellung in Figur 14 zeigt ein Kernelement 20 mit abgeflachten Erhebungen 12 wie in Figur 13, wobei jede abgeflachte Erhebung im Zentrum ihrer Scheitelfläche eine Noppe 26 aufweist. Mit den Scheitelflächen liegt auch hier jede Erhebung 12 an einem ebenen Abschnitt der jeweils anderen Halbkugelplatte 14; 16, 18 an, wobei jede Noppe 26 in eine dafür vorgesehene Ausnehmung 28 in der anderen Halbkugelplatte 14; 16, 18 eingreift. Die Darstellungen in Figur 15 und Figur 16 zeigen eine Ausführungsform, bei welcher die Erhebungen 12 als Basis zum Beispiel einen ringförmigen Abschnitt 36 aufweisen. Die Erhebungen sind also abschnittsweise, nämlich beim Übergang von den ebenen Abschnitten der Platte 10 zu den gekrümmten Abschnitten zylindrisch. Für die Enden solcher Erhebungen kommt eine Form mit und ohne Noppen 26 und mit und ohne Abflachung in Betracht.

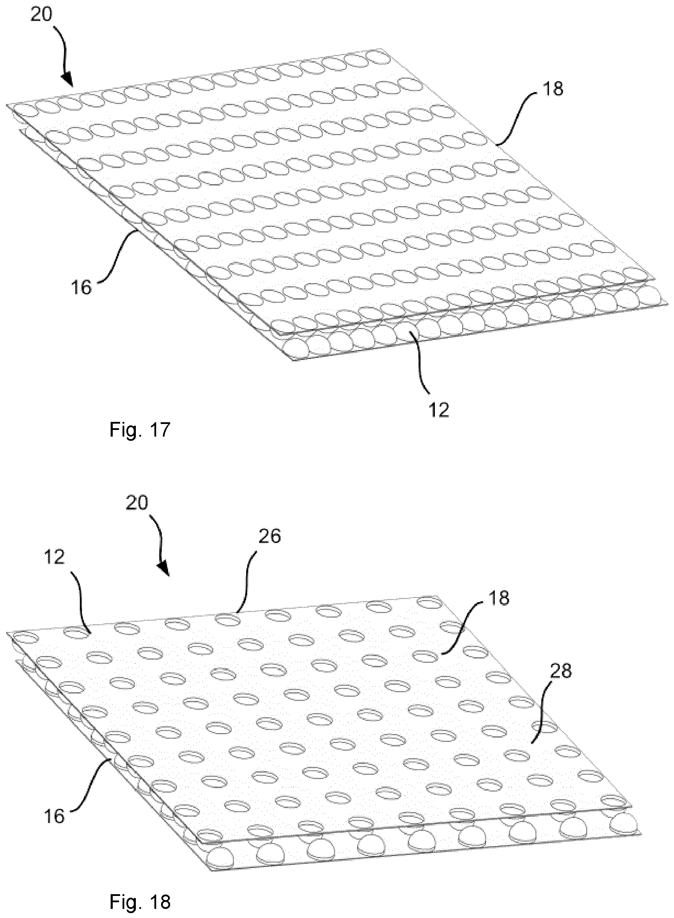

Die nochmals weiteren Darstellungen (Figur 17 und Figur 18) zeigen beispielhaft mögliche Anordnungen der Erhebungen 12 auf Halbkugelplatten 14; 16, 18. Die Darstellung in Figur 17 zeigt eine Ausführungsform mit einer linienförmigen Anordnung der Erhebungen 12, wobei entlang einer jeden Linie von Erhebungen 12 diese nur gering voneinander beabstandet sind und jeweils alle Erhebungen 12 einer Linie im Bereich der jeweils anderen Halbkugelplatte 14; 16, 18 in einem freien Bereich zwischen parallelen dortigen Linien von Erhebungen 12 aufgenommen werden. Die Darstellung in Figur 18 zeigt eine Ausführungsform mit einer ebenfalls linienförmigen Anordnung der Erhebungen 12 (gezeigt sind beispielhaft Erhebungen 12 mit einem ringförmigen Abschnitt 36). Hier ist entlang einer jeden Linie ausreichend Raum für eine Aufnahme einer Erhebung 12 der jeweils anderen Halbkugelplatte 14; 16, 18. Die beiden Halbkugelplatten 14; 16, 18 können folglich - wie gezeigt - mit einer überlappenden Anordnung der Linien kombiniert werden. Zwischen den Linien bleibt Raum, der zum Beispiel für Leitungen 30 oder für ein ohne Leitungen 30 strömendes Medium genutzt werden kann. Die beiden Halbkugelplatten 14; 16, 18 können ebenso - nicht gezeigt - mit einer Anordnung jeweils einer Linie von Erhebungen 12 der einen Halbkugelplatte 14; 16, 18 zwischen zwei Linien von Erhebungen 12 der anderen Halbkugelplatte 14; 16, 18 kombiniert werden.

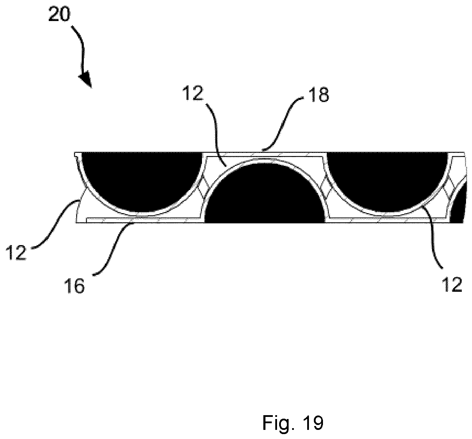

Die Darstellung in Figur 19 zeigt abschließend einen vergrößerten Ausschnitt aus einem Längsschnitt durch ein Kernelement 20 (wie in Fig. 3, Fig. 5 usw.) und dabei eine besondere, optionale Ausführungsform, bei welcher die Erhebungen 12 gefüllt sind. Eine Füllung der Erhebungen 12 bewirkt beispielsweise eine Erhöhung der Druckfestigkeit jeder Erhebung 12 und damit insgesamt eine Erhöhung der Druckfestigkeit eines mit Halbkugelplatten 14; 16, 18 mit gefüllten Erhebungen 12 gebildeten Kernelements 20. Zur Optimierung von Brandschutzeigenschaften kommt zum Beispiel eine Füllung mit einem sogenannten intumeszierenden Material (intumeszenter Baustoff) in Betracht. Intumeszente Baustoffe nehmen in grundsätzlich an sich bekannter Art und Weise unter Hitzeeinwirkung an Volumen zu und entsprechend an Dichte ab. Gefüllte Erhebungen 12 kommen auch für mehrschichtige Kernelemente 20 gemäß Figur 9 und Figur 10 und der dortigen Beschreibung in Betracht.

In der Regel finden intumeszente Baustoffe im vorbeugenden baulichen Brandschutz Anwendung, wo sie ein oder mehrere der folgenden Aufgaben zu bewältigen haben:
- Aufschäumen, das heißt das Formen einer leichten Isolierungsschicht als Hitzebremse. Beispiel: in die Isolation eines Kabels eingebrachte Stoffe (z. B. expandierbares Graphit / Blähgraphit) setzen bei Wärmeeinwirkung Gase frei. Zusammen mit dem veraschenden Isolierungsmaterial entsteht eine "geschäumte" Ascheschicht, welche die Sauerstoffzufuhr - und somit die Flammenausbreitung - behindert;
- Endotherme Wirkung durch Hydrate, die durch Wasserdampffreisetzung kühlen;
- Expansionsdruck aufbringen, z. B. um Kunststoff-Rohre im Durchbruch (durch eine Wand oder Betondecke) im Brandfall zu versiegeln.

Intumeszente Baustoffe werden auch "Dämmschichtbildner" genannt. Die oben beschriebenen - an sich bekannten Wirkungen - intumeszenter Baustoffe sind vorteilhaft auch zusammen mit dem hier vorgeschlagenen Kernelement 20 kombinierbar, indem dessen Erhebungen 12 (oder zumindest eine große Anzahl der davon umfassten Erhebungen 12) mit einem solchen Baustoff gefüllt sind.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben wird zuvorderst ein Kernelement 20 für Sandwichelemente, wobei das Kernelement 20 zumindest zwei miteinander kombinierte Halbkugelplatten 16, 18 umfasst, wobei jede Halbkugelplatte 16, 18 zwischen ebenen Abschnitten 10 und beabstandet voneinander, insbesondere in einem matrixartigen Erhebungsraster, uniforme halbkugelförmige, kugelsegmentförmige oder kugelschichtförmige Erhebungen 12 - allgemein Erhebungen 12 mit zumindest einem Bereich oder einem Abschnitt in Form einer Ellipsoidschicht, insbesondere einem Bereich oder einem Abschnitt, welcher entlang einer ununterbrochenen Umfangslinie eine Außenoberfläche in Form einer Ellipsoidschicht hat - aufweist, wobei die beiden oder jeweils zwei Halbkugelplatten 16, 18, insbesondere Halbkugelplatten 16, 18 mit einem gleichen Erhebungsraster, mit ihren Erhebungen 12 einander zugewandt sind und wobei bei zwei oder jeweils zwei miteinander kombinierten Halbkugelplatten 16, 18 die Erhebungen 12 einer Halbkugelplatte 16, 18 mit ihren Scheitelpunkten oder Scheitelflächen jeweils an einem ebenen Abschnitt der anderen Halbkugelplatte 16, 18 anliegen.

Das hier vorgeschlagene Kernelement 20 kommt nicht nur als Kernelement 20 für Sandwichelemente in Betracht, sondern ist auch eigenständig und vor allem auch selbst als Sandwichelement oder anstelle bisheriger Sandwichelemente verwendbar.

Eine einzelne Halbkugelplatte 14, die nach dem hier vorgeschlagenen Ansatz zusammen mit zumindest einer weiteren Halbkugelplatte 14 ein Kernelement 20 bildet, kommt auch zur Anwendung ohne eine weitere Halbkugelplatte 14 in Betracht. Dann werden die Erhebungen 12 der einzelnen Halbkugelplatte 14 mit einer Deckschicht 24 abgedeckt und die einzelne Halbkugelplatte 14 und die Deckschicht 24 bilden zusammen ein Sandwichelement. Auch ein solches Sandwichelement ist grundsätzlich in derselben Art und Weise verwendbar, wie dies vorstehend für das aus zumindest zwei Halbkugelplatten 14 gebildete Kernelement 20 beschrieben wurde und die obigen Ausführungen gelten entsprechend auch für ein solches Sandwichelement. Die Erhebungen 12 der einzelnen Halbkugelplatte 14 können alle hier beschriebenen Formen sowie Noppen 26 oder keine Noppen 26 aufweisen. Im Falle von Erhebungen 12 mit Noppen 26 weist die Deckschicht 24 Ausnehmungen 28 zur Aufnahme der Noppen 26 - wie weiter oben beschrieben - auf. Auch für die Anordnung und Verteilung der Erhebungen 12 auf einer solchen zusammen mit zumindest einer Deckschicht 24 zu einem Sandwichelement kombinierten Halbkugelplatte 14 gilt alles oben Gesagte entsprechend.

Das hier vorgeschlagene Kernelement 20 mit zumindest zwei Halbkugelplatten 14 oder alternativ auch ein Sandwichelement mit einer Halbkugelplatte 14 kommt alleine oder zusammen mit weiteren Kernelementen 20 bzw. Sandwichelementen zum Beispiel für folgende Anwendungszwecke in Betracht: Innenraumwand, Kabinenwand, Außenwand, Bordwand, Karosserie, Brandschutzelement, Brandschutzwand, Akustikplatte, Wärmedämmplatte, Sonnenkollektor, Flächenheizung/-kühlung, Konstruktionsplatte mit Leitungsführungen (Kabel, Rohre etc.) usw.

### Bezugszeichenliste

- 10: Platte; ebener Abschnitt
- 12: Erhebung
- 14: Halbkugelplatte
- 16: (untere) Halbkugelplatte
- 18: (obere) Halbkugelplatte
- 20: Kernelement
- 22: Kontaktstelle
- 24: Deckschicht
- 26: Noppe
- 28: Öffnung
- 30: Leitung
- 32: randseitige Verbindung
- 34: Medium; Dämmmaterial
- 36: ringförmiger Abschnitt

## Patentansprüche

1. Kernelement (20), insbesondere für Sandwichelemente, wobei
- das Kernelement (20) zumindest zwei miteinander kombinierte Halbkugelplatten (16, 18) aufweist,
- jede Halbkugelplatte (16, 18) zwischen ebenen Abschnitten (10) und beabstandet voneinander uniforme halbkugelförmige, kugelsegmentförmige oder kugelschichtförmige Erhebungen (12) aufweist,
- die beiden oder jeweils zwei Halbkugelplatten (16, 18) mit ihren Erhebungen (12) einander zugewandt sind und
- bei zwei oder jeweils zwei miteinander kombinierten Halbkugelplatten (16, 18) die Erhebungen (12) einer Halbkugelplatte (16, 18) mit ihren Scheitelpunkten oder Scheitelflächen jeweils an einem ebenen Abschnitt der anderen Halbkugelplatte (16, 18) anliegen,
**dadurch gekennzeichnet, dass**
- die zwei oder jeweils zwei einander zugewandten Halbkugelplatten (16, 18) jeweils miteinander verbunden sind, indem die Erhebungen (12) im Bereich ihrer Scheitelpunkte oder Scheitelflächen mit dem ebenen Abschnitt der anderen oder einer anderen Halbkugelplatte (16, 18), an dem sie anliegen, verbunden sind.

2. Kernelement (20) nach Anspruch 1, **dadurch gekennzeichnet, dass** die Erhebungen (12) der miteinander kombinierten Halbkugelplatten (16, 18) beabstandet zueinander angeordnet sind.

3. Kernelement (20) nach Anspruch 1 oder 2, **dadurch gekennzeichnet, dass**
- jede Halbkugelplatte (16, 18) die Erhebungen (12) in einem matrixartigen Erhebungsraster aufweist und
- das Erhebungsraster der miteinander kombinierten Halbkugelplatten (16, 18) gleich ist.

4. Kernelement (20) nach einem der Ansprüche 1 bis 3, **dadurch gekennzeichnet, dass**
- die Erhebungen (12) im Bereich ihrer Scheitelpunkte oder Scheitelflächen eine radial nach außen weisende Noppe (26) tragen,
- jede Halbkugelplatte (16, 18) im Bereich ihrer ebenen Abschnitte und im Erhebungsraster zur Aufnahme jeweils einer Noppe (26) Öffnungen (28) aufweist und
- bei zwei oder jeweils zwei miteinander kombinierten Halbkugelplatten (16, 18) die Noppen (26) einer Halbkugelplatte (16, 18) formschlüssig in die Öffnungen (28) der jeweils anderen Halbkugelplatte (16, 18) eingreifen.

5. Kernelement (20) nach einem der Ansprüche 1 bis 4, **gekennzeichnet durch**
- zumindest zwei an zwei Randseiten miteinander verbundene Halbkugelplatten (16, 18),
- wobei die beiden an zwei Randseiten miteinander verbundenen Halbkugelplatten (16, 18) von einer der verbleibenden Randseiten zu der anderen verbleibenden Randseite für ein flüssiges oder gasförmiges Medium (34) durchströmbar sind.

6. Kernelement (20) nach einem der Ansprüche 1 bis 5, **gekennzeichnet durch** zwischen zwei einander zugewandten Halbkugelplatten (16, 18) sowie zwischen den davon umfassten Erhebungen (12) eingeschlossene Leitungen (30).

7. Kernelement (20) nach einem der Ansprüche 1 bis 6, **dadurch gekennzeichnet, dass** ein freier Raum zwischen zwei einander zugewandten Halbkugelplatten (16, 18) sowie zwischen den davon umfassten Erhebungen (12) mit einem Dämmmaterial (34) ausgefüllt ist.

8. Kernelement (20) nach einem der Ansprüche 1 bis 7, **gekennzeichnet durch** mit einem intumeszenten Baustoff gefüllte Erhebungen (12).

9. Verwendung eines Kernelements (20) nach einem der Ansprüche 1 bis 8 als Flächenheizung oder -kühlung.

10. Verwendung eines Kernelements (20) nach einem der Ansprüche 1 bis 8 als Sonnenkollektor.

11. Verfahren zum Herstellen eines Kernelements (20) nach einem der Ansprüche 1 bis 8, wobei zumindest zwei Halbkugelplatten (16, 18) mit ihren Erhebungen (12) einander zugewandt werden und miteinander in einer Konfiguration kombiniert werden, bei der die Scheitelpunkte oder Scheitelflächen der Erhebungen (12) einer Halbkugelplatte (16, 18) jeweils an einem ebenen Abschnitt der anderen Halbkugelplatte (16, 18) zwischen dortigen Erhebungen (12) anliegen,
**dadurch gekennzeichnet, dass**
die zumindest zwei Halbkugelplatten (16, 18) durch Verbinden der Scheitelpunkte oder Scheitelflächen der Erhebungen einer Halbkugelplatte (16, 18) mit jeweils einem ebenen Abschnitt der anderen Halbkugelplatte (16, 18) zwischen dortigen Erhebungen (12) kombiniert werden.

12. Verfahren nach Anspruch 11, **dadurch gekennzeichnet, dass** die zumindest zwei Halbkugelplatten (16, 18) durch Verbinden der Scheitelpunkte oder Scheitelflächen der Erhebungen einer Halbkugelplatte (16, 18) mit jeweils einem ebenen Abschnitt der anderen Halbkugelplatte (16, 18) zwischen dortigen Erhebungen (12) derart kombiniert werden, dass die Erhebungen (12) der miteinander kombinierten Halbkugelplatten (16, 18) beabstandet zueinander angeordnet sind.

13. Verfahren nach Anspruch 11 oder 12, **dadurch gekennzeichnet, dass** die zumindest zwei Halbkugelplatten (16, 18) durch Verkleben oder Verschmelzen von radial nach außen weisenden und im Bereich der Scheitelpunkte oder Scheitelflächen von den Erhebungen (12) einer Halbkugelplatte (16, 18) ausgehenden Noppen (26) mit jeweils einer Öffnung (28) in einem ebenen Abschnitt der anderen Halbkugelplatte (16, 18) zwischen dortigen Erhebungen (12) kombiniert werden.

## Claims

1. Core element (20), in particular for sandwich elements, wherein
- the core element (20) has at least two hemisphere panels (16, 18) combined with each other,
- each hemisphere panel (16, 18) having uniform hemispherical elevations (12) or elevations (12) in the shape of a sphere segment or a sphere layer between planar regions (10) and spaced at a distance from one another,
- the two or in each case two hemisphere panels (16, 18) face each other with their elevations (12), and
- when two or in each case two hemisphere panels (16, 18) combined with each other, the elevations (12) of a hemispherical panel (16, 18) respectively make contact with their apex points or apex surfaces to a planar region of the other hemisphere panel (16, 18),
**characterized in that**
- the two or in each case two hemisphere panels (16, 18) facing each other in each case are connected to each other **in that** the elevations (12) are connected in the region of their apex points or apex surfaces with the planar region of the other or another hemisphere panel (16, 18) to which they make contact.

2. Core element (20) according to claim 1, **characterized in that** the elevations (12) of the hemisphere panels (16, 18) combined with each other are arranged at a distance to each other.

3. Core element (20) according to claim 1 or 2, **characterized in that**
- each hemisphere panel (16, 18) has the elevations (12) in a matrix-shaped elevation array, and
- the elevation array of the hemisphere panels (16, 18) combined with each other is equivalent.

4. Core element (20) according to any of claims 1 to 3, **characterized in that**
- the elevations (12) carry a dimple (26) pointing radially outward in the region of their apex points or apex surfaces,
- each hemisphere panel (16, 18) has openings (28) in the area of its planar regions and in the elevation array to accommodate respectively one dimple (26), and
- for two or in each case two hemisphere panels (16, 18) combined with each other, the dimples (26) of one hemisphere panel (16, 18) engage into the opening (28) of the respectively other hemisphere panel (16, 18) with a shape lock.

5. Core element (20) according to any of claims 1 to 4, **characterized by**
- at least two hemisphere panels (16, 18) connected to each other on two perimeter sides,
- wherein a liquid or gaseous medium (34) can flow through the two hemisphere panels (16, 18) connected to each on two perimeter sides from one of the remaining perimeter sides to the other remaining perimeter side.

6. Core element (20) according to any of claims 1 to 5, **characterized by** lines (30) embedded between two hemisphere panels (16, 18) facing each other and between the elevations (12) of these hemisphere panels (16, 18).

7. Core element (20) according to any of claims 1 to 6, **characterized in that** a free space between two hemisphere panels (16, 18) facing each other and between the elevations (12) comprised by said hemisphere panels (16, 18) is filled with an insulating material (34).

8. Core element (20) according to any of claims 1 to 7, **characterized by** elevations (12) filled with an intumescent construction material.

9. Use of a core element (20) according to any of claims 1 to 8 as panel heater or panel cooler.

10. Use of a core element (20) according to any of claims 1 to 8 as sun collector.

11. Method for producing a core element (20) according to any of claims 1 to 8, wherein at least two hemisphere panels (16, 18) are oriented to face each other with their elevations (12) and are combined with each other in a configuration, wherein the apex points or apex surfaces of the elevations (12) of one hemisphere panel (16, 18) respectively make contact to respectively one planar region of the other hemisphere panel (16, 18) between elevations (12) located there,
**characterized in that**
the at least two hemisphere panels (16, 18) are combined by connecting the apex points or apex surfaces of the elevations of one hemisphere panel (16, 18) with respectively one planar region of the other hemisphere panel (16, 18) between elevations (12) located there.

12. Method according to claim 11, **characterized in that** the at least two hemisphere panels (16, 18) are combined by connecting the apex points or apex surfaces of the elevations of one hemisphere panel (16, 18) with respectively one planar region of the other hemisphere panel (16, 18) between elevations (12) located there such that the elevations (12) of the hemisphere panels (16, 18) combined with each other are arranged at a distance to each other.

13. Method according to claim 11 or 12, **characterized in that** the at least two hemisphere panels (16, 18) are combined by gluing or by melting together radially outward pointing dimples (26) originating in the region of the apex points or apex surfaces from the elevations (12) of a hemisphere panel (16, 18) with respectively one opening (28) in a planar region of the other hemisphere panel (16, 18) between elevations (12) located there.

## Revendications

1. Élément central (20), en particulier pour des éléments sandwich,
- l'élément central (20) comprenant au moins deux panneaux (16, 18) composés d'éléments hémisphériques combinés entre eux,
- chaque panneau à éléments hémisphériques (16, 18) présentant, entre des sections planes (10) et à distance les unes des autres, des protubérances (12) uniformes en forme de demi-sphère, de segment de sphère ou de couche de sphère,
- les deux panneaux aux éléments hémisphériques (16, 18) ou deux panneaux à éléments hémisphériques respectifs, avec leurs protubérances (12) se faisant face, et
- dans le cas de deux panneaux à éléments hémisphériques (16, 18) ou respectivement de deux panneaux à éléments hémisphériques (16, 18) combinés entre eux, les protubérances (12) d'un panneau à éléments hémisphériques (16, 18) s'appliquent respectivement par leurs sommets ou leurs surfaces de sommet contre une section plane de l'autre panneau à éléments hémisphériques (16, 18), **caractérisé en ce que**
les deux ou respectivement deux panneaux à éléments hémisphériques (16, 18) sont respectivement reliés entre eux, **en ce que** les protubérances (12) sont reliées, dans la zone de leurs sommets ou de leurs surfaces de sommet, à la partie plane de l'autre panneau à éléments hémisphériques (16, 18) ou d'un autre panneau à éléments hémisphériques sur lequel ils s'appuient.

2. Élément central (20) selon la revendication 1, **caractérisé en ce que** les protubérances (12) des panneaux à éléments hémisphériques (16, 18) combinés entre eux sont disposés avec un écart les uns par rapport aux autres.

3. Élément central (20) selon la revendication 1 ou 2, **caractérisé en ce que**
- chaque panneau à éléments hémisphériques (16, 18) présente les protubérances (12) dans une grille de protubérances de type matriciel et
- la grille des protubérances des panneaux à éléments hémisphériques (16, 18) combinées entre eux est identique.

4. Élément central (20) selon l'une des revendications 1 à 3, **caractérisé en ce que**
- les protubérances (12) présentent, dans la zone de leurs sommets ou de leurs surfaces de sommet, un bouton (26) orienté radialement vers l'extérieur,
- chaque panneau à éléments hémisphériques (16, 18), présente dans la zone de ses sections planes et dans la grille des protubérances des ouvertures (28) pour recevoir respectivement un bouton (26) et
- s'il y a deux panneaux à éléments hémisphériques ou deux panneaux à éléments hémisphériques combinés entre eux (16, 18) les boutons (26) d'un panneau à éléments hémisphériques (16, 18) s'engagent par assemblage jointif dans les ouvertures (28) de l'autre panneau à éléments hémisphériques (16, 18) respectif.

5. Élément central (20) selon l'une des revendications 1 à 4, **caractérisé en ce que**
- au moins deux panneaux à éléments hémisphériques (16, 18) sont reliés entre eux sur deux côtés marginaux,
- les deux panneaux à éléments hémisphériques (16, 18) reliés l'un à l'autre sur deux côtés marginaux peuvent être traversés de l'un des côtés marginaux restants à l'autre côté marginal restant par un milieu liquide ou gazeux (34).

6. Élément central (20) selon l'une des revendications 1 à 5, **caractérisé en ce que** entre deux panneaux à éléments hémisphériques (16, 18) se faisant face, des conduits (30) sont enfermés entre les protubérances (12) qu'elles entourent.

7. Élément central (20) selon l'une des revendications 1 à 6, **caractérisé en ce qu'**un espace libre entre deux panneaux à éléments hémisphériques (16, 18) se faisant face ainsi qu'entre les protubérances (12) qu'ils entourent est rempli d'un matériau isolant (34).

8. Élément central (20) selon l'une des revendications 1 à 7, **caractérisé par** des protubérances (12) remplies d'un matériau de construction intumescent.

9. Utilisation d'un élément central (20) selon l'une quelconque des revendications 1 à 8 comme chauffage ou refroidissement d'une surface.

10. Utilisation d'un élément central (20) selon l'une des revendications 1 à 8 comme capteur solaire.

11. Procédé de fabrication d'un élément central (20) selon l'une des revendications 1 à 8, **caractérisé en ce qu'**au moins deux panneaux à éléments hémisphériques (16, 18) se font face avec leurs protubérances (12) et sont combinés entre eux dans une configuration dans laquelle les sommets ou les surfaces de sommet des protubérances (12) d'un panneau à éléments hémisphériques (16, 18) s'appliquent respectivement contre une section plane de l'autre panneau à éléments hémisphériques (16, 18) entre des protubérances (12) qui s'y trouvent,
**caractérisé en ce que**
les au moins deux panneaux à éléments hémisphériques (16, 18) sont combinés en reliant les sommets ou les surfaces de sommet des protubérances d'un panneau à éléments hémisphériques (16, 18) à une partie plane respective de l'autre panneau à éléments hémisphériques (16, 18) entre des protubérances (12) de celui-ci.

12. Procédé selon la revendication 11, **caractérisé en ce que** au moins deux panneaux à éléments hémisphériques (16, 18) sont combinés en reliant les sommets ou les surfaces de sommet des protubérances d'un panneau à éléments hémisphériques (16, 18) avec respectivement une section plane de l'autre plaque hémisphérique (16, 18) entre des protubérances (12) qui s'y trouvent, de telle sorte que les protubérances (12) des panneaux à éléments hémisphériques (16, 18) combinés entre eux sont disposées à une certaine distance les unes des autres.

13. Procédé selon la revendication 11 ou 12, **caractérisé en ce que** les au moins deux panneaux à éléments hémisphériques (16, 18) sont combinés par collage ou fusion de boutons (26) orientés radialement vers l'extérieur et partant des protubérances (12) d'un panneau à éléments hémisphériques (16, 18) dans la zone des sommets ou des surfaces de sommet, sont combinés chacun avec une ouverture (28) dans une partie plane de l'autre panneau à éléments hémisphériques (16, 18) entre des protubérances (12) de celle-ci.
